# EUROPEAN PATENT APPLICATION

(11) **EP 3 951 695 A1**
(43) Date of publication of application: **09.02.2022**
(21) Application number: 20784637.9
(22) Date of filing: 26.02.2020
(51) Int. Cl.: G06Q 50/06

(54) **INFORMATION PROCESSING DEVICE, INFORMATION PROCESSING METHOD, AND PROGRAM**

(30) Priority: 29.03.2019 JP 2019065429
(71) Applicant: Nippon Gas Co., Ltd., Tokyo 151-8582 (JP)
(72) Inventor: WADA, Shinji, Tokyo 151-8582 (JP)
(74) Representative: Betten & Resch
(86) International application number: PCT/JP2020/007677
(87) International publication number: WO 2020/202916

(57) **Abstract**

Conventionally, it is not possible to propose an energy consumption plan, using the use status of gas such as LPG and the use status of electricity. With an information processing apparatus, it is possible to propose an energy consumption plan, using the use status of gas such as LPG and the use status of electricity, the information processing apparatus including: a gas information storage unit that stores two or more pieces of gas information that contain time-series gas use information regarding use of gas; an electricity information storage unit that stores two or more pieces of electricity information that contain time-series electricity use information regarding use of electricity; an energy proposal information acquisition unit that acquires energy proposal information that indicates a proposal regarding energy that is to be used, using the time-series gas use information and the time-series electricity use information; and an energy proposal information output unit that outputs the energy proposal information acquired by the energy proposal information acquisition unit.

## Description

### Technical field

The present invention relates to, for example, an information processing apparatus that proposes a plan regarding energy, using gas use information and electricity use information.

### Background Art

There is a conventional energy planning system for proposing an appropriate energy plan for residents (see Patent Document 1).

Such an energy planning system includes: a detection unit that detects a state of energy facility in a residence; a prediction unit that predicts a future lifestyle of an inhabitant of the residence; and a proposal unit that determines information regarding an energy plan for the residence based on the result of the detection by the detection unit and the life style predicted by the prediction unit, and outputs the information.

### Citation List

### Patent Document

Patent Document 1: JP 2016-146199A

### Summary of Invention

### Technical Problem

However, according to the conventional technology, it is not easy to provide an effective plan for a household because the state of the energy facility and the prediction result of the future lifestyle of the inhabitant of the residence are used. That is to say, with the conventional technology, it is not possible to propose an appropriate energy consumption plan, using the use status of gas such as LPG and the use status of electricity.

Note that examples of energy consumption plan proposals include a proposal of selection of a medium, which is a type of energy, a proposal of selection of an appliance related to energy, and a proposal of selection of an energy company.

### Solution to Problem

An information processing apparatus according to a first aspect of the present invention is an information processing apparatus including: a gas information storage unit that stores two or more pieces of gas information that contain time-series gas use information regarding use of gas; an electricity information storage unit that stores two or more pieces of electricity information that contain time-series electricity use information regarding use of electricity; an energy proposal information acquisition unit that acquires energy proposal information that indicates a proposal regarding energy that is to be used, using the time-series gas use information and the time-series electricity use information; and an energy proposal information output unit that outputs the energy proposal information acquired by the energy proposal information acquisition unit.

With such a configuration, it is possible to propose an energy consumption plan, using the use status of gas such as LPG and the use status of electricity.

An information processing apparatus according to a second aspect of the present invention is the information processing apparatus according to the first aspect of the invention, further including a climate information acquisition unit that acquires climate information regarding climate, wherein the energy proposal information acquisition unit acquires energy proposal information that indicates a proposal regarding energy, using the climate information acquired by the climate information acquisition unit, the time-series gas use information, and the time-series electricity use information.

With such a configuration, it is possible to propose an energy consumption plan, using the use status of gas such as LPG, the use status of electricity, and climate information.

An information processing apparatus according to a third aspect of the present invention is the information processing apparatus according to the first or second aspect of the invention, further including a unit charge information storage unit that stores two or more pieces of unit charge information that specify a charge per unit amount of two or more kinds of energy, including unit gas charge information that specifies a gas charge per unit amount and unit electricity charge information that specifies an electricity charge per unit amount; a gas charge information acquisition part that acquires gas charge information that specifies a charge for use of gas, using time-series gas use information and unit gas charge information; an electricity charge information acquisition part that acquires electricity charge information that specifies a charge for use of electricity, using time-series electricity use information and unit electricity charge information; and a medium identifier acquisition part that acquires a medium identifier that specifies the cheapest energy of two or more kinds of energy, using gas charge information and electricity charge information, and the energy proposal information output unit outputs the medium identifier acquired by the medium identifier acquisition part.

With such a configuration, it is possible to propose a selection of an energy medium, using the use status of gas such as LPG and the use status of electricity.

An information processing apparatus according to a fourth aspect of the present invention is the information processing apparatus according to the third aspect of the invention, wherein the unit charge information storage unit stores unit charge information for each time zone from which a unit charge for each time zone can be acquired regarding two or more kinds of energy that include gas and electricity, the gas charge information acquisition part acquires gas charge information for each time zone, using gas use information for each time zone and unit gas charge information for each time zone, the electricity charge information acquisition part acquires electricity charge information for each time zone, using electricity use information for each time zone and unit electricity charge information for each time zone, the medium identifier acquisition part acquires, for each time zone, a medium identifier that specifies the cheapest energy of two or more kinds of energy, using gas charge information for the time zone corresponding thereto and electricity charge information for the time zone corresponding thereto, and the energy proposal information output unit outputs the medium identifier for each time zone acquired by the medium identifier acquisition part.

With such a configuration, it is possible to propose a selection of an energy medium for each time zone, using the use status of gas such as LPG and the use status of electricity.

An information processing apparatus according to a fifth aspect of the present invention is the information processing apparatus according to the fourth aspect of the invention, further including: a control unit that performs processing to use energy that corresponds to the accepted medium identifier, of two or more kinds of energy that include gas and electricity, wherein, when a medium identifier for one time zone acquired by the medium identifier acquisition part is different from a medium identifier for the previous time zone, the energy proposal information output unit passes the medium identifier for the one time zone to the control unit upon the one time zone being reached, and the control unit performs processing to use energy that corresponds to the medium identifier accepted from the energy proposal information output unit.

With such a configuration, it is possible to perform control regarding an energy medium for each time zone, using the use status of gas such as LPG and the use status of electricity.

An information processing apparatus according to a sixth aspect of the present invention is the information processing apparatus according to the first or second aspect of the invention, further including: a unit charge information storage unit that stores two or more pieces of unit charge information that specify a charge per unit amount of two or more kinds of energy, including unit gas charge information that specifies a gas charge per unit amount and unit electricity charge information that specifies an electricity charge per unit amount; and an appliance information storage unit that stores two or more pieces of appliance information that contain an appliance identifier that specifies an appliance and performance information that specifies performance of the appliance, wherein the energy proposal information acquisition unit includes an appliance identifier acquisition part that acquires an appliance identifier that corresponds to the cheapest energy, using the time-series gas use information, the time-series electricity use information, and the performance information contained in the appliance information, and the energy proposal information output unit outputs the appliance identifier acquired by the appliance identifier acquisition part.

With such a configuration, it is possible to propose a selection of an energy appliance, using the use status of gas such as LPG and the use status of electricity.

An information processing apparatus according to a seventh aspect of the present invention is the information processing apparatus according to the sixth aspect of the invention, wherein the unit charge information storage unit stores unit charge information for each time zone from which a unit charge for each time zone can be acquired regarding two or more kinds of energy that include gas and electricity, and the energy proposal information acquisition unit includes an appliance identifier acquisition part that acquires an appliance identifier that corresponds to the cheapest energy for each time zone, using time-series gas use information, time-series electricity use information, the unit charge information for each time zone, and the performance information contained in the appliance information.

With such a configuration, it is possible to propose a selection of an energy appliance for each time zone, using the use status of gas such as LPG and the use status of electricity.

An information processing apparatus according to an eighth aspect of the present invention is the information processing apparatus according to the seventh aspect of the invention, further including: a control unit that performs processing to use an energy appliance that corresponds to the accepted appliance identifier, of two or more kinds of energy that include gas and electricity, wherein, when an appliance identifier for one time zone acquired by the energy proposal information acquisition unit is different from an appliance identifier for the previous time zone, the energy proposal information output unit passes the appliance identifier for the one time zone to the control unit upon the one time zone being reached, and the control unit performs processing to use the appliance identifier accepted from the energy proposal information output unit.

With such a configuration, it is possible to perform control regarding an energy appliance for each time zone, using the use status of gas such as LPG and the use status of electricity.

An information processing apparatus according to a ninth aspect of the present invention is the information processing apparatus according to the first or second aspect of the invention, further including a company information storage unit that stores two or more pieces of company information that contain a company identifier that identifies a company that supplies energy, and a medium identifier that specifies a kind of energy supplied by the company; and a unit charge information storage unit that stores two or more pieces of unit charge information that are associated with a company identifier, wherein the energy proposal information acquisition unit includes a company identifier acquisition part that acquires a company identifier of a company that supplies the cheapest energy, of companies that supply energy, using the time-series gas use information, the time-series electricity use information, the company information, and the unit charge information, and the energy proposal information output unit outputs the company identifier acquired by the company identifier acquisition part.

With such a configuration, it is possible to propose a selection of an energy company, using the use status of gas such as LPG and the use status of electricity.

An information processing apparatus according to a tenth aspect of the present invention is the information processing apparatus according to the ninth aspect of the invention, wherein the unit charge information storage unit stores unit charge information for each time zone from which a unit charge for each time zone can be acquired, in association with two or more company identifiers, and the energy proposal information acquisition unit includes a company identifier acquisition part that acquires a company identifier that corresponds to the cheapest company, using gas use information for each time zone, electricity use information for each time zone, and the unit charge information for each time zone.

With such a configuration, it is possible to propose a selection of an energy company for each time zone, using the use status of gas such as LPG and the use status of electricity.

An information processing apparatus according to an eleventh aspect of the present invention is the information processing apparatus according to the tenth aspect of the invention, further comprising: a control unit that performs processing to use energy that corresponds to the accepted company identifier, wherein, when a company identifier for one time zone acquired by the company identifier acquisition part is different from a company identifier for the previous time zone, the energy proposal information output unit passes the company identifier for the one time zone to the control unit upon the one time zone being reached, and the control unit performs processing to use energy that corresponds to the company identifier accepted from the energy proposal information output unit.

With such a configuration, it is possible to perform control regarding an energy company for each time zone, using the use status of gas such as LPG and the use status of electricity.

An information processing apparatus according to a twelfth aspect of the present invention is the information processing apparatus according to any one of the first to eleventh aspects of the invention, further including: a gas information reception unit that receives gas information from a gas information transmission apparatus that includes: a terminal acquisition unit that acquires gas information that is information that contains gas use information regarding use of gas in an LPG cylinder and corresponds to a cylinder identifier that identifies an LPG cylinder; and a terminal transmission unit that transmits the gas information acquired by the terminal acquisition unit to the information processing apparatus; and a gas information accumulation unit that accumulates the gas information received by the gas information reception unit, in the gas information storage unit, in association with the time information and the cylinder identifier.

With such a configuration, it is easier to collect gas information regarding customers.

### Advantageous Effects of Invention

With an information processing apparatus according to the present invention, it is possible to propose an energy consumption plan, using the use status of gas such as LPG and the use status of electricity.

### Brief Description of Drawings

FIG. 1 is a conceptual diagram for an information system A according to Embodiment 1.
FIG. 2 is a block diagram for the information system A according to the same.
FIG. 3 is a block diagram for an information processing apparatus A2 according to the same.
FIG. 4 is a flowchart illustrating examples of operations that are performed by a gas information transmission apparatus A1 according to the same.
FIG. 5 is a flowchart illustrating examples of operations that are performed by an information processing apparatus A2 according to the same.
FIG. 6 is a flowchart illustrating examples of operations that are performed by a next deliverer terminal A3 according to the same.
FIG. 7 is a flowchart illustrating examples of operations that are performed by a facility terminal A4 according to the same.
FIG. 8 is a conceptual diagram for the information system A according to the same.
FIG. 9 is a conceptual diagram for an information system F according to Embodiment 2.
FIG. 10 is a block diagram for the information system F according to the same.
FIG. 11 is a flowchart illustrating examples of operations that are performed by an information processing apparatus F2 according to the same.
FIG. 12 is a flowchart illustrating an example of medium proposal processing according to the same.
FIG. 13 is a flowchart illustrating an example of appliance proposal processing according to the same.
FIG. 14 is a flowchart illustrating an example of company proposal processing according to the same.
FIG. 15 is an overview diagram for a computer system according to the above embodiments.
FIG. 16 is a block diagram for the computer system according to the same.

### Description of Embodiments

The following describes embodiments of information system and so on with reference to the drawings. Note that the components with the same reference numerals in the embodiments perform the same operations, and therefore redundant descriptions thereof may be omitted.

### Embodiment 1

The present embodiment describes an information system that includes one or more gas information transmission apparatuses that acquire and transmit gas information that includes information regarding the use of gas in one or more LPG cylinders, and information processing apparatus.

In addition, the present embodiment describes an information system that includes a gas information transmission apparatus that transmits two or more pieces of gas information all at once. Note that the gas information transmission apparatus acquires gas use information described later, once an hour, and transmits the gas use information for one day, to the information processing apparatus, once a day, for example. Note that the gas information transmission apparatus may acquires the gas use information described later once an hour, and separately transmits the gas use information for one day, to the information processing apparatus, twice a day or more, for example.

Furthermore, the present embodiment describes an information system that includes an information processing apparatus that also receives delivery cylinder information described later, delivery vehicle position information described later, climate information described later, and cylinder replacement information described later.

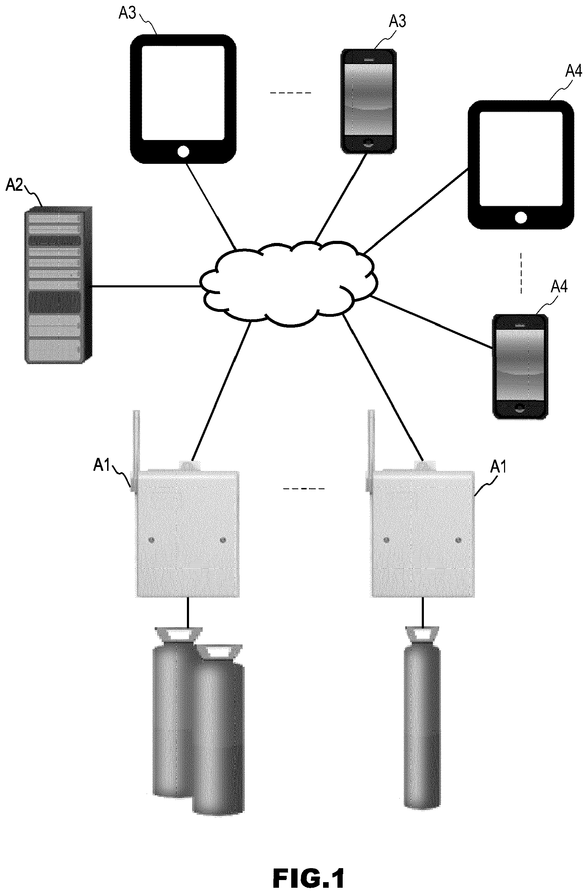

FIG. 1 is a conceptual diagram for an information system A according to the present embodiment. The information system A includes one or more gas information transmission apparatuses A1, an information processing apparatus A2, one or more deliverer terminals A3, and one or more facility terminals A4.

Gas information transmission apparatuses A1 are apparatuses that acquire gas information that includes gas use information, and transmit the gas information to the information processing apparatus A2. The gas information transmission apparatus A1 need only have a communication function, and the type thereof is not limited.

The information processing apparatus A2 is a server apparatus that receives and accumulates information such as gas information. "Information such as gas information" may be gas information alone, or one or more pieces of information of: delivery cylinder information described later; delivery vehicle position information described later; cylinder replacement information described later; and climate information may be used in addition to gas information. The information processing apparatus A2 can be realized using a so-called cloud server or an ASP server, but there is no limitation on the type thereof.

The deliverer terminals A3 are terminals that are used by deliverers. However, the deliverer terminals A3 may be terminals that are mounted on delivery vehicles. The deliverer terminals A3 are, for example, smartphones, tablet terminals, so-called personal computers, or the like, but there is no limitation on the type thereof. The deliverer terminals A3 have a communication function.

The facility terminals A4 are terminals that are present in the facility. The facility terminals A4 are, for example, smartphones, tablet terminals, so-called personal computers, or the like, but there is no limitation on the type thereof. The facility terminals A4 have a communication function. The facility is, for example, a factory or a depot station. A factory is a facility for filling gas cylinders with gas. A depot station is a facility where gas cylinders are placed.

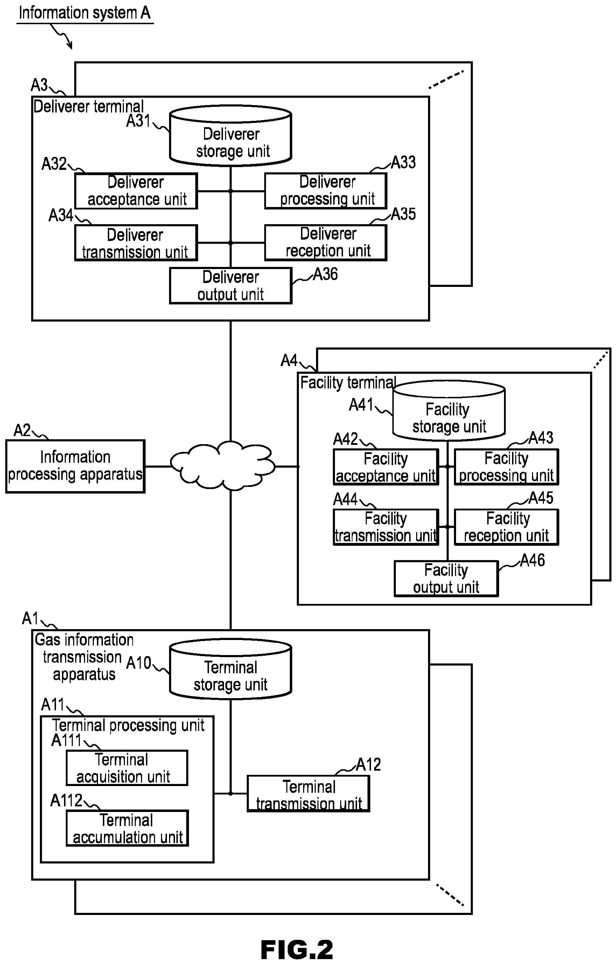

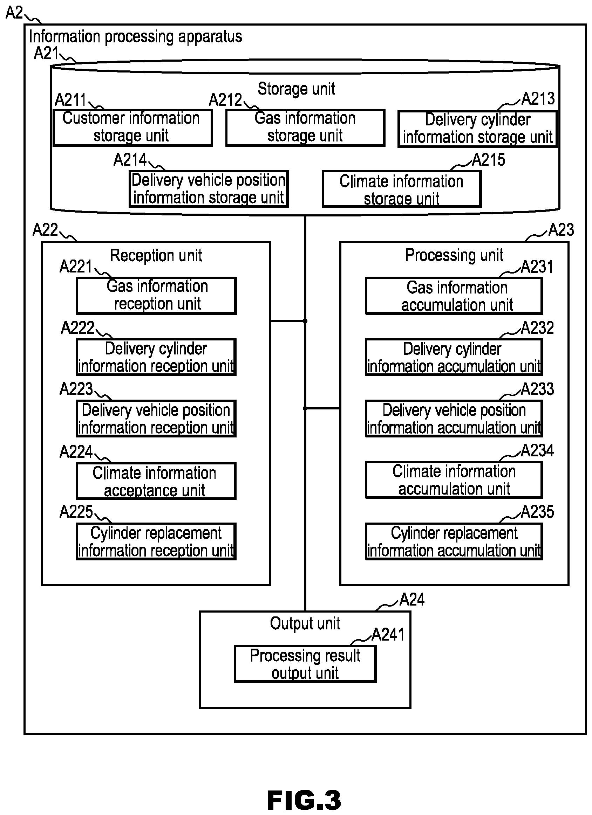

FIG. 2 is a block diagram for the information system A according to the present embodiment. FIG. 3 is a block diagram for the information processing apparatus A2 that is included in the information system A.

The gas information transmission apparatuses A1 includes a terminal storage unit A10, a terminal processing unit A11, and a terminal transmission unit A12. The terminal processing unit A11 includes a terminal acquisition unit A111 and a terminal accumulation unit A112.

The information processing apparatus A2 includes a storage unit A21, a reception unit A22, a processing unit A23, and an output unit A24. The storage unit A21 includes a customer information storage unit A211, a gas information storage unit A212, a delivery cylinder information storage unit A213, a delivery vehicle position information storage unit A214, and a climate information storage unit A215. The reception unit A22 includes a gas information reception unit A221, a delivery cylinder information reception unit A222, a delivery vehicle position information reception unit A223, a climate information acceptance unit A224, and a cylinder replacement information reception unit A225. The processing unit A23 includes a gas information accumulation unit A231, a delivery cylinder information accumulation unit A232, a delivery vehicle position information accumulation unit A233, a climate information accumulation unit A234, and a cylinder replacement information accumulation unit A235. The output unit A24 includes a processing result output unit A241.

Each deliverer terminal A3 includes a deliverer storage unit A31, a deliverer acceptance unit A32, a deliverer processing unit A33, a deliverer transmission unit A34, a deliverer reception unit A35, and a deliverer output unit A36.

Each facility terminal A4 includes a facility storage unit A41, a facility acceptance unit A42, a facility processing unit A43, a facility transmission unit A44, a facility reception unit A45, and a facility output unit A46.

The terminal storage unit A10 included in each gas information transmission apparatus A1 stores various kinds of information. Examples of the various kinds of information include gas information, a customer identifier that identifies a customer, a cylinder identifier that identifies a cylinder, and time information that specifies a time. Time information is, for example, date information that specifies a date, time point information that specifies a date and time, and time zone information that specifies a time zone. When time information is time point information, the time information may be regarded as including date information.

The terminal storage unit A10 stores pieces of gas information as of two or more points in time. Gas information is, for example, information associated with a cylinder identifier, a customer identifier that identifies a customer, and date information that indicates a date. Gas information is associated with time information, for example. Gas information contains, for example, gas use information. Gas use information is information regarding the gas used. Gas information contains, for example, one or more pieces of information of: unit time gas use information; and gas meter reading value information. Unit time gas use information is information that specifies the amount of gas used per unit time. Unit time gas use information is, for example, information that specifies the amount of gas used every one hour. Gas meter reading value information is, for example, information that specifies a gas meter reading value. Gas meter reading value information is, for example, information that specifies gas meter reading values acquired every one hour.

The gas information in the terminal storage unit A10 typically is information accumulated by the terminal accumulation unit A112.

The terminal processing unit A11 performs various kinds of processing. Examples of the various kinds of processing include processing that is performed by the terminal acquisition unit A111 and the terminal accumulation unit A112. Examples of the various kinds of processing include processing that is performed to delete gas information that has been transmitted, from the terminal storage unit A10.

The terminal acquisition unit A111 acquires gas information that is information that includes gas use information regarding the use of gas in an LPG cylinder and corresponds to a cylinder identifier that identifies an LPG cylinder. The terminal acquisition unit A111 acquires, for example, information from a gas meter. The terminal acquisition unit A111 acquires, for example, a meter reading value acquired from a gas meter, and calculates a gas use information that is the difference between the previous meter reading value and the current meter reading value and specifies the amount of gas used per unit time.

It is preferable that the terminal acquisition unit A111 acquires gas use information n times a day (n is 2 or more) every unit time. It is also preferable that the terminal acquisition unit A111 acquires gas use information every one hour.

It is preferable that the terminal acquisition unit A111 acquires time information from a clock (not shown) and associates the time information with the acquired gas use information. Note that the clock (not shown) may be present in the gas information transmission apparatuses A1 or may be a clock of an external apparatus such as an NTP server.

The terminal accumulation unit A112 accumulates the gas information acquired by the terminal acquisition unit A111, in the terminal storage unit A10. It is preferable that the terminal accumulation unit A112 accumulates the gas information acquired by the terminal acquisition unit A111, in the terminal storage unit A10 every unit time. Note that the unit time is, for example, on hour, thirty minutes, two hours, or the like. It is also preferable that the terminal accumulation unit A112 accumulates the gas information acquired by the terminal acquisition unit A111, in the terminal storage unit A10 in association with one or more pieces of information of: a customer identifier, a cylinder identifier, and time information.

The terminal transmission unit A12 transmits the gas information acquired by the terminal acquisition unit A111 to the information processing apparatus A2. The gas information acquired by the terminal acquisition unit A111 may be the gas information stored in the terminal storage unit A10.

The terminal transmission unit A12 transmits, for example, the gas information acquired by the terminal acquisition unit A111 to the information processing apparatus A2 in association with one or more identifiers. The one or more identifiers are, for example, one or more identifiers of: a cylinder identifier; and a cylinder identifier.

It is preferable that the terminal transmission unit A12 transmits gas information as of two or more time points stored in the terminal storage unit A10 to the information processing apparatus A2 when a predetermined condition is satisfied. The predetermined condition is, for example, that a predetermined time is reached, a predetermined number of pieces of gas information are stored in the terminal storage unit A10, or the like. In addition, transmitting gas information in association with a cylinder identifier or the like is, for example, transmitting gas information together with a cylinder identifier or the like, but there is no limitation on the method of associating pieces of information with each other. Note that the cylinder identifier is normally stored in the terminal storage unit A10. It is also preferable that, when the cylinder to be used is changed to another cylinder, the cylinder identifier of the other cylinder is automatically stored in the terminal storage unit A10.

Here, the transmission of gas information as of two or more time points may mean the transmission of two or more information sets that each consists of a piece of gas information and a piece of time information, or the transmission of two or more pieces of gas information arranged in chronological order.

In addition, the transmission of gas information for one day may mean the transmission of twenty-four information sets that each consists of gas information and time information, or the transmission of twenty-four pieces of gas information arranged in chronological.

Note that one piece of gas information is information that contains one piece of gas use information, but one piece of gas information may be information that contains a plurality of pieces of gas use information.

It is preferable that the terminal transmission unit A12 transmits two or more pieces of gas information in the terminal storage unit A10 to the information processing apparatus A2 less than n times a day.

It is preferable that the terminal transmission unit A12 transmits gas information to the information processing apparatus A2 once a day. Note that there is no limitation on the time at which the terminal transmission unit A12 transmits gas information.

The terminal transmission unit A12 may transmit gas information at different time points depending on a condition. That is, for example, the terminal transmission unit A12 may normally transmit a plurality of pieces of gas information to the information processing apparatus A2 at a low frequency (a first frequency), and when a predetermined condition is satisfied, the terminal transmission unit A12 may transmit gas information to the information processing apparatus A2 at a higher frequency (a second frequency) than the frequency in the normal case. The predetermined condition here is, for example, that the terminal processing unit A11 determines that the amount of gas that has been used is large enough to satisfy the predetermined condition (for example, an amount of gas no less than or greater than a threshold value has been used). Alternatively, the predetermined condition is, for example, that the terminal processing unit A11 determines that a small amount of gas has been used for a period that is long enough to satisfy the predetermined condition (for example, an amount of gas no greater than or less than a threshold value has been used for a period no less than a first threshold value).

It is also preferable that, after the terminal transmission unit A12 has transmitted gas information to the information processing apparatus A2, the terminal processing unit A11 deletes the transmitted gas information from the terminal storage unit A10.

The storage unit A21 included in the information processing apparatus A2 stores various kinds of information. Examples of the various kinds of information include customer information described later, gas information, delivery cylinder information described later, delivery vehicle position information described later, and climate information described later.

The customer information storage unit A211 stores one or more pieces of customer information each in association with a customer identifier. Customer information is information regarding a customer. Customer information contains, for example, a name, customer position information, and contact information. Customer position information is information that specifies the position of a customer. Customer position information is, for example, (latitude,longitude), address, or the like. Contact information is information that specifies a point of contact, and is, for example, an e-mail address or a telephone number. date information contains, for example, date information that specifies the date on which the gas cylinder was replaced. The customer information contains, for example, cylinder type information, cylinder number information, and gas remaining amount information. Cylinder type information is information that specifies the type of the cylinder used by the customer. The cylinder number information is information that specifies the number of cylinders installed in the customer's home. Gas remaining amount information is information that specifies the amount of gas remaining in the customer's gas cylinders. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A"). Customer information may contain, for example, LPG cylinder information that contains cylinder capacity information regarding the capacity of the LPG cylinder used by the customer. Note that LPG cylinder information may be cylinder type information.

The gas information storage unit A212 stores one or more pieces of gas information. The gas information storage unit A212 normally stores two or more pieces of gas information associated with customer identifiers. It is preferable that the pieces of gas information are associated with one or more pieces of information of: time information that specifies a time; and a cylinder identifier. In addition, here, the association with time information and cylinder identifier may be realized by storing gas information so that time information and a cylinder identifier can be known.

The delivery cylinder information storage unit A213 stores one or more pieces of delivery cylinder information. Delivery cylinder information is information regarding a cylinder that is to be delivered. Delivery cylinder information contains, for example, cylinder type information and cylinder state information. Delivery cylinder information typically is information from which the number of cylinders can be known. That is to say, delivery cylinder information may contain number information that specifies the number of cylinders, or the number of pieces of delivery cylinder information that have been received may indicate the number of cylinders. Cylinder type information is information that specifies the type of the cylinder, and indicates, for example, 20 Kg, 30 Kg, or 50 Kg. Cylinder state information is information that indicates whether or not the cylinder is full. Delivery cylinder information corresponds to, for example, one or more pieces of information of: a cylinder identifier; a delivery vehicle identifier; a deliverer identifier; and time information that specifies entry/exit date and time. Note that the entry/exit date and time is an entry date and time or an exit date and time to/from a factory where the cylinder is to be filled with gas, or entry date and time or an exit date and time to/from a depot station where cylinders are stored. Alternatively, time point information may be information that only specifies a date.

The delivery vehicle position information storage unit A214 stores one or more pieces of delivery vehicle position information. Delivery vehicle position information is information that specifies the position of a delivery vehicle. Delivery vehicle position information is, for example, (latitude,longitude), but may be, for example, a facility identifier that identifies the nearest facility. The facility is, for example, a factory or a depot station. Delivery vehicle position information is associated with, for example, a delivery vehicle identifier that identifies the delivery vehicle for the cylinder, or a deliverer identifier.

The climate information storage unit A215 stores one or more pieces of climate information. Climate information is information regarding weather. Climate information is, for example, one or more pieces of information of: weather; temperature; humidity; and so on. It is preferable that climate information is associated with time information. Time information is, for example, date information and time point information.

The reception unit A22 receives various kinds of information. Examples of the various kinds of information include gas information, delivery cylinder information, delivery vehicle position information, climate information, and cylinder replacement information.

The gas information reception unit A221 receives one or more pieces of gas information from the gas information transmission apparatuses A1. The gas information reception unit A221 receives, for example, gas information associated with one or more identifiers of: a customer identifier; and a cylinder identifier, from the gas information transmission apparatuses A1.

The delivery cylinder information reception unit A222 receives one or more pieces of delivery cylinder information. The delivery cylinder information reception unit A222 receives delivery cylinder information in association with one or more pieces of information of: a cylinder identifier; a delivery vehicle identifier; and a deliverer identifier, for example. The delivery cylinder information reception unit A222 receives delivery cylinder information in association with a loading platform identifier, for example. The loading platform identifier is information that specifies a loading platform loading platform on which the cylinder is placed. The delivery cylinder information reception unit A222 receives delivery cylinder information in association with time point information that identifies entry/exit date and time, for example. The entry/exit date and time is the date and time of entry/exit to/from a facility. The delivery cylinder information reception unit A222 receive delivery cylinder information from the facility terminals A4, for example. The delivery cylinder information reception unit A222 receive delivery cylinder information from the deliverer terminals A3, for example. Note that there is no limitation on the source of delivery cylinder information. The cylinder identifier is, for example, information stored in a communication means (for example, an RFID tag) installed in a cylinder that is to be delivered, and indirectly or directly received from such a communication means. The cylinder identifier may be, for example, information input to a facility terminal A4 by a user and transmitted from the facility terminal A4. The delivery vehicle identifier is, for example, information stored in a communication means (for example, an RFID tag) installed in a delivery vehicle itself (for example, a trailer head), and indirectly or directly received from such a communication means. Note that, in such a case, the delivery vehicle identifier may be referred to as a trailer head identifier. In addition, the delivery vehicle identifier and the trailer head identifier may be different pieces of information, and in such a case, the delivery cylinder information reception unit A222 may receive delivery cylinder information in association with the trailer head identifier. In addition, the deliverer identifier is, for example, information indirectly or directly received from a deliverer terminal A3 held by a deliverer. The deliverer identifier may be, for example, information stored in a communication means installed in a delivery vehicle itself (for example, a trailer head), and indirectly or directly received from such a communication means. Furthermore, the loading platform identifier is, for example, information stored in a communication means (for example, an RFID tag) installed in a loading platform of a delivery vehicle, and indirectly or directly received from such a communication means.

The delivery vehicle position information reception unit A223 receives one or more pieces of delivery vehicle position information. The delivery vehicle position information reception unit A223 normally receives delivery vehicle position information from the deliverer terminals A3 that are terminals on delivery vehicles, but there is no limitation on the source of delivery vehicle position information. Note that the deliverer terminals A3 may be terminals that are different from the terminals held by deliverers, and may be terminals mounted on delivery vehicles.

The delivery vehicle position information reception unit A223 normally receives delivery vehicle position information in association with a delivery vehicle identifier that identifies a delivery vehicle. However, the delivery vehicle position information reception unit A223 may receive delivery vehicle position information in association with a deliverer identifier. Also, delivery vehicle identifier and deliverer identifier may be the same information.

The climate information acceptance unit A224 receives one or more pieces of climate information. Here, "acceptance" means, for example, reception from a server apparatus (not shown), but may be regarded as a concept that includes acceptance of information input from an input device such as a keyboard, a mouse, or a touch panel, or acceptance of information read from a recording medium such as an optical disk, a magnetic disk, or a semiconductor memory. Note that the server apparatus (not shown) is an apparatus that stores climate information.

The cylinder replacement information reception unit A225 receives one or more pieces of cylinder replacement information. Cylinder replacement information is information that indicates that a cylinder has been replaced. The cylinder replacement information reception unit A225 receives cylinder replacement information that is paired with one or more pieces of information of: a customer identifier; and a cylinder identifier, for example. The cylinder replacement information reception unit A225 receives, for example, cylinder replacement information from a deliverer terminal A. Note that there is no limitation on the transmission source of cylinder replacement information.

The processing unit A23 performs predetermined processing, using two or more pieces of gas information stored in the gas information storage unit A212. Examples of the predetermined processing include delivery date prediction processing described later, delivery control processing described later, futures trading processing described later, residence stay processing described later, energy optimum plan presentation processing described later, household credit rating acquisition processing described later, statistical processing, and so on. statistical processing is statistical processing to be performed on a plurality of pieces of gas information. Examples of statistical processing includes processing that is performed to calculate the average amount of gas used by a household for a certain period from a plurality of pieces of gas information, processing that is performed to calculate the cumulative value of the amount of gas used for a certain period, and processing that is performed to acquire a graph showing changes in the amount of gas used. Note that delivery date prediction processing, delivery control processing, futures trading processing, residence stay processing, energy optimum plan presentation processing, and household credit rating acquisition processing will be described in Embodiment 2 and the subsequent embodiments. Note that delivery date prediction processing is processing that is performed to predict the delivery date on which a gas cylinder is to be delivered to household. Delivery control processing is processing that is performed to deliver a gas cylinder to a household that has run out of gas, for example. Futures trading processing is processing that is performed to determine the price of gas and supporting futures trading. Residence stay processing is processing that is performed to output information regarding whether or not an inhabitant is present in a residence. Energy optimum plan presentation processing is processing that is performed to present an appropriate energy plan. Household credit rating acquisition processing is processing that is performed to acquire and output a credit rating of a household.

The processing unit A23 performs predetermined processing, also using one or more pieces of delivery cylinder information stored in the delivery cylinder information storage unit A213, for example. The predetermined processing is, for example, delivery control processing.

The processing unit A23 performs the predetermined processing, using one or more pieces of delivery vehicle position information stored in the delivery vehicle position information storage unit A214, for example. The predetermined processing is, for example, delivery control processing.

The processing unit A23 performs the predetermined processing, using one or more pieces of climate information stored in the climate information storage unit A215. Examples of the predetermined processing include delivery date prediction processing, futures trading processing, and energy optimum plan presentation processing.

The gas information accumulation unit A231 accumulates the one or more pieces of gas information received by the gas information reception unit A221, in the gas information storage unit A212. The gas information accumulation unit A231 accumulates each piece of gas information received by the gas information reception unit A221, in the gas information storage unit A212, in association with one or more pieces of information of: time information; a customer identifier; and a cylinder identifier. Note that such time information may be information received from the gas information transmission apparatuses A1, or information acquired from a clock (not shown).

The delivery cylinder information accumulation unit A232 accumulates the one or more pieces of delivery cylinder information received by the delivery cylinder information reception unit A222, in the delivery cylinder information storage unit A213. The delivery cylinder information accumulation unit A232 accumulates each piece of delivery cylinder information in the delivery cylinder information storage unit A213 in association with one or more pieces of information of: a cylinder identifier; a delivery vehicle identifier; and a deliverer identifier, for example.

The delivery vehicle position information accumulation unit A233 accumulates the one or more pieces of delivery vehicle position information received by the delivery vehicle position information reception unit A223, in the delivery vehicle position information storage unit A214. The delivery vehicle position information accumulation unit A233 accumulates each piece of delivery vehicle position information in the delivery vehicle position information storage unit A214 in association with a delivery vehicle identifier or a deliverer identifier.

The climate information accumulation unit A234 accumulates one or more pieces of climate information, in the climate information storage unit A215. The climate information accumulation unit A234 normally each piece of climate information in the climate information storage unit A215 in association with time information. Note that time information may be information received by the reception unit A22 or may be acquired from a clock (not shown). In addition, time information may be date information or time point information.

When the cylinder replacement information reception unit A225 receives cylinder replacement information, the cylinder replacement information accumulation unit A235 updates the gas remaining amount information contained in the gas information paired with one or more pieces of information of: a customer identifier; and a cylinder identifier, to information that specifies that the amount of gas remaining is full.

The deliverer storage unit A31 included in each deliverer terminal A3 stores various kinds of information. Examples of the various kinds of information include a deliverer identifier that identifies a deliverer. Examples of the various kinds of information include a delivery vehicle identifier that identifies a delivery vehicle. The deliverer identifier and the delivery vehicle identifier may be the same information. Examples of the various kinds of information include cylinder replacement information. Cylinder replacement information is information that indicates that a cylinder has been replaced. Cylinder replacement information is associated with one or more identifiers of: a customer identifier; and a cylinder identifier.

The deliverer acceptance unit A32 accepts various instructions and various kinds of information. Examples of the various instructions and various kinds of information include cylinder replacement information. Examples of the various instructions and various kinds of information include cylinder replacement information and one or more identifiers of: a customer identifier; and a cylinder identifier. When a cylinder of a certain household is to be replaced or has been replaced, the deliverer inputs cylinder exchange information to the deliverer terminal A3. In addition, cylinder replacement information may be input by pressing a button, or may be input by inputting information in a field, for example.

It is preferable that the deliverer inputs one or more identifiers of: a customer identifier; and a cylinder identifier together with cylinder replacement information. In such a case, the deliverer acceptance unit A32 accepts cylinder replacement information, and one or more identifiers of: a customer identifier; and a cylinder identifier.

Any input means may be employed to input cylinder replacement information, such as a touch panel, a keyboard, a mouse, a menu screen, or the like. The deliverer acceptance unit A32 can be realized using a device driver for the input means such as a touch panel or a keyboard, or control software or the like for controlling the menu screen.

The deliverer processing unit A33 performs various kinds of processing. Examples of the various kinds of information include processing that is performed to convert the information accepted by the deliverer acceptance unit A32 so as to have a data structure of information to be transmitted. Examples of the various kinds of processing include processing that is performed when the deliverer acceptance unit A32 accepts cylinder replacement information, to form information in which the cylinder replacement information, the deliverer identifier in the deliverer storage unit A31, and one or more identifiers of: the customer identifier; and the cylinder identifier, which have been input, are associated with each other. Examples of the various kinds of information include processing that is performed to convert the information received by the deliverer reception unit A35 so as to have a data structure of information that is to be output.

The deliverer transmission unit A34 transmits cylinder replacement information to the information processing apparatus A2. The deliverer transmission unit A34 normally transmits cylinder replacement information that is associated with one or more identifiers of: a customer identifier; and a cylinder identifier, to the information processing apparatus A2. It is preferable that the deliverer transmission unit A34 transmits a deliverer identifier as well as cylinder replacement information.

The deliverer reception unit A35 receives various kinds of information. The deliverer reception unit A35 receives various kinds of information from the information processing apparatus A2, for example. The deliverer reception unit A35 receives customer information described later, from the information processing apparatus A2, for example. Note that customer information is information regarding a customer, and is information paired with a customer identifier. The customer information received by the deliverer reception unit A35 is information regarding the customer to which a gas cylinder is to be delivered, for example. Note that the customer identifier may be contained in customer information.

The deliverer output unit A36 outputs various kinds of information. Examples of the various kinds of information include information formed by the deliverer processing unit A33. Examples of the various kinds of information include customer information. Customer information is information regarding the customer to which a gas cylinder is to be delivered. It is preferable that customer information contains one or more pieces of information of: a customer identifier; customer position information; and information regarding the gas cylinder to be delivered. Customer position information is information that specifies the position of a customer. Customer position information is, for example, (latitude,longitude), address, or the like. Information regarding the gas cylinder to be delivered is, for example, cylinder type information that specifies the type of a gas cylinder, the number of gas cylinders, and so on.

Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The facility storage unit A41 included in each facility terminal A4 stores various kinds of information. Examples of the various kinds of information include a facility identifier that identifies a facility. It is preferable that the facility storage unit A41 stores delivery cylinder information that is information received by a terminal in a delivery vehicle, (for example, an RFID) and is information regarding a cylinder mounted on the delivery vehicle. Delivery cylinder information is associated with a cylinder identifier. It is preferable that delivery cylinder information is associated with a loading platform identifier and entry/exit date and time, for example. Delivery cylinder information contains, for example, cylinder type information and cylinder state information. It is preferable that delivery cylinder information contains information that specifies the number of cylinders to be delivered.

The facility acceptance unit A42 accepts various instructions and various kinds of information.

The facility processing unit A43 performs various kinds of processing. Examples of the various kinds of processing include processing that is performed to accumulate information received by the facility reception unit A45. The facility processing unit A43 at least temporarily accumulates the delivery cylinder information and identifiers received by the facility reception unit A45, in the facility storage unit A41. Note that examples of the identifiers include one or more identifiers of: a cylinder identifier; a loading platform identifier; a delivery vehicle identifier; and a deliverer identifier.

The facility transmission unit A44 transmits various kinds of information. The facility transmission unit A44 transmits, for example, various kinds of information to the information processing apparatus A2. The facility transmission unit A44 transmits delivery cylinder information in association with identifiers, for example. Examples of the identifiers include one or more identifiers of: a cylinder identifier; a loading platform identifier; a delivery vehicle identifier; and a deliverer identifier.

The facility reception unit A45 receives various kinds of information. The facility reception unit A45 receives, for example, various kinds of information from a terminal of a delivery vehicle (for example, an RFID). The facility reception unit A45 receives delivery cylinder information in association with identifiers, for example. Examples of the identifiers include one or more identifiers of: a cylinder identifier; a loading platform identifier; a delivery vehicle identifier; and a deliverer identifier.

The facility output unit A46 outputs various kinds of information.

It is preferable that the terminal storage unit A10, the storage unit A21, the customer information storage unit A211, the gas information storage unit A212, the delivery cylinder information storage unit A213, the delivery vehicle position information storage unit A214, the climate information storage unit A215, the deliverer storage unit A31, and the facility storage unit A41 are realized using a non-volatile recording medium, but they can be realized using a volatile recording medium.

There is no limitation on the process in which information is stored in the terminal storage unit A10 and so on. For example, information may be stored in the terminal storage unit A10 or the like via a recording medium, or information transmitted via a communication line or the like may be stored in the terminal storage unit A10 or the like, or information input via an input device may be stored in the terminal storage unit A10 or the like.

The terminal processing unit A11, the terminal acquisition unit A111, the terminal accumulation unit A112, the processing unit A23, the gas information accumulation unit A231, the delivery cylinder information accumulation unit A232, the delivery vehicle position information accumulation unit A233, the climate information accumulation unit A234, the cylinder replacement information accumulation unit A235, the deliverer processing unit A33, and the facility processing unit A43 can typically be realized using an MPU, a memory, or the like. The processing procedures performed by the terminal processing unit A11 and so on typically are realized using software, and the software is recorded on a recording medium such as a ROM. However, such processing procedures may be realized using hardware (a dedicated circuit). Needless to say, a CPU or a GPU may be used instead of the MPU.

The terminal transmission unit A12, the output unit A24, processing result output unit A241, the deliverer transmission unit A34, and the facility transmission unit A44 typically are realized using a wireless or wired communication means, but may be realized using a broadcast means.

The reception unit A22, the gas information reception unit A221, the delivery cylinder information reception unit A222, the delivery vehicle position information reception unit A223, the climate information acceptance unit A224, the cylinder replacement information reception unit A225, the deliverer reception unit A35, and the facility reception unit A45 typically are realized using a wireless or wired communication means, but may be realized using a means for receiving broadcast.

The deliverer acceptance unit A32 and the facility acceptance unit A42 can be realized using a touch panel, a keyboard, a mouse, a menu screen, or the like.

The deliverer output unit A36 and the facility output unit A46 may be regarded as including or not including an output device such as a display or a speaker. The deliverer output unit A36 and so on can be realized using the driver software of the output device, the driver software of the output device and the output device, or the like.

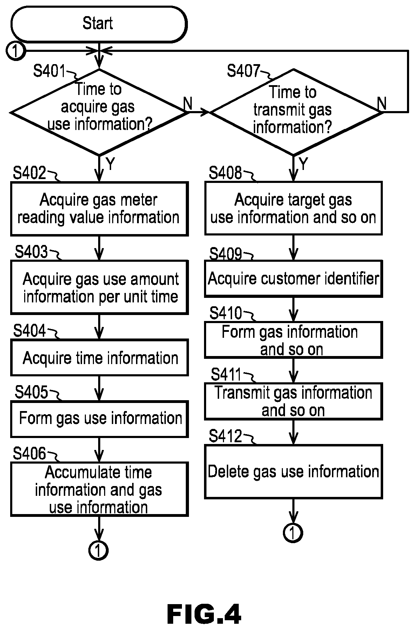

Next, operations that are performed by the information system A will be described. First, examples of operations that are performed by the gas information transmission apparatus A1 will be described with reference to the flowchart shown in FIG. 4.

(Step S401) The terminal processing unit A11 determines whether or not it is the time to acquire gas use information. If it is the time to acquire gas use information, processing proceeds to step S402, and if it is not the time to acquire gas use information, processing proceeds to step S407. For example, when acquiring gas use information every one hour, the terminal processing unit A11 acquires time information from a clock (not shown), and if the time indicated by the time information matches "X hour 00 minutes" (X is a natural number in the range of 1 to 24), the terminal processing unit A11 determines that it is the time to acquire gas use information.

(Step S402) The terminal acquisition unit A111 acquires gas meter reading value information from a gas meter (not shown). Noted that such a technique is a well-known technique. Note that the gas meter typically is an LP gas meter, and is a device that holds the gas meter reading value that indicates the flow rate integration measured from the installation of the device.

(Step S403) The terminal acquisition unit A111 calculates information indicating gas use amount per unit time, which is the difference between the previously acquired gas meter reading value information and the gas meter reading value information currently acquired in step S402. Note that the terminal acquisition unit A111 acquires the information indicating the gas use amount per unit time by calculating, for example, "information indicating the gas use amount per unit time = the previously acquired gas meter reading value information - the gas meter reading value information acquired in step S402".

(Step S404) The terminal acquisition unit A111 acquires time information that indicates the current time from a clock (not shown).

(Step S405) The terminal acquisition unit A111 forms gas use information to be accumulated, using the information indicating the gas use amount per unit time, acquired in step S403.

(Step S406) The terminal accumulation unit A112 accumulates the time information acquired in step S404 and the gas use information formed in step S405 in association with each other. Processing returns to step S401. Note that the location where the gas use information or the like is to be accumulated typically is the terminal storage unit A10. Note that the terminal accumulation unit A112 may accumulate gas use information in association with a cylinder identifier. In such a case, the terminal acquisition unit A111 acquires the cylinder identifier as well.

(Step S407) The terminal processing unit A11 determines whether or not it is the time to transmit gas information. If it is the time to transmit gas information, processing proceeds to step S408, and if it is not the time to transmit gas information, processing returns to step S401. For example, when transmitting gas information once a day, the terminal processing unit A11 acquires time information from a clock (not shown), and upon determining that the time indicated by the time information has passed a predetermined time (for example, "24:01"), the terminal processing unit A11 determines that it is the time to transmit gas information. Note that even if it is determined that the predetermined time has passed, the gas information that has already been transmitted is usually not transmitted again. Also, even if the terminal processing unit A11 determines that the predetermined time has passed, the terminal processing unit A11 usually does not determine that it is the time to transmit gas information until a predetermined period (for example, one day) elapses.

(Step S408) The terminal processing unit A11 acquires gas use information and so on to be transmitted, from the terminal storage unit A10. The gas use information and so on are, for example, a set of pieces of information composed of gas use information and time information, gas use information alone, gas use information and a cylinder identifier, or a set of pieces of information composed of gas use information, a cylinder identifier, and time information.

(Step S409) The terminal processing unit A11 acquires a customer identifier from the terminal storage unit A10.

(Step S410) The terminal processing unit A11 forms gas information and so on to be transmitted. Gas information contains, for example, a plurality of pieces of gas use information and so on and one or more identifiers. The one or more identifiers are, for example, one or more pieces of information of: a customer identifier; and a cylinder identifier.

(Step S411) The terminal transmission unit A12 transmits the gas information and so on formed in step S410 to the information processing apparatus A2.

(Step S412) The terminal processing unit A11 deletes the transmitted gas use information and so on. Here, a flag indicating that the information has been transmitted may be accumulated in association with the transmitted gas use information and so on. Such addition of a flag may be regarded as the same as the deletion. Processing returns to step S401.

In the flowchart shown in FIG. 4, the number of times gas use information is accumulated is larger than the number of times gas information is transmitted. That is to say, in the flowchart shown in FIG. 4, a plurality of pieces of gas use information are transmitted to the information processing apparatus A2 all at once. As a result, the power consumption of the gas information transmission apparatus A1 can be reduced, and the frequency of battery replacement of the gas information transmission apparatus A1 can be reduced. However, in the flowchart shown in FIG. 4, gas information may be transmitted each time gas use information is acquired.

Also, in the flowchart shown in FIG. 4, the terminal transmission unit A12 may transmit gas information to the information processing apparatus A2 at different frequencies in a case where a predetermined condition is satisfied and in a case where the predetermined condition is not satisfied. Here, the predetermined condition is, for example, that the terminal processing unit A11 determines that the amount of gas that has been used is large enough to satisfy the predetermined condition.

In the flowchart shown in FIG. 4, processing is terminated when power is turned off or an interruption is made to terminate the processing.

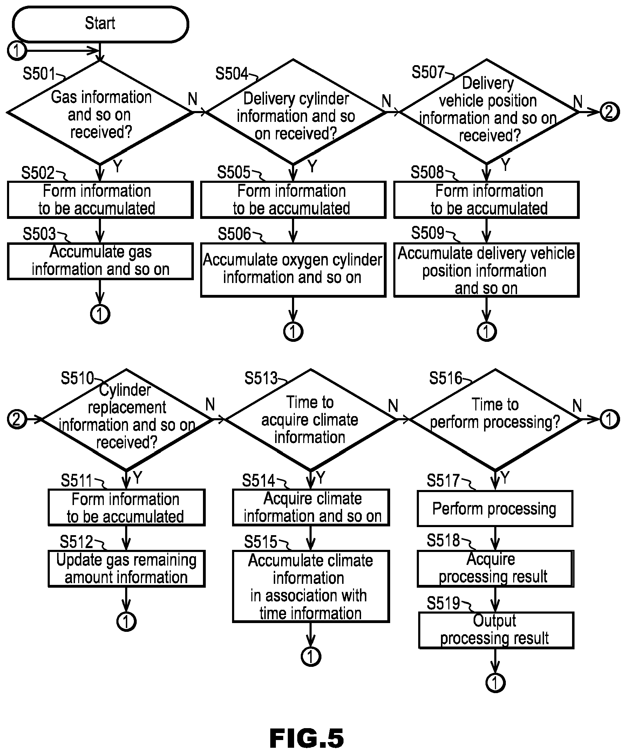

Next, examples of operations that are performed by the information processing apparatus A2 will be described with reference to the flowchart shown in FIG. 5.

(Step S501) The gas information reception unit A221 determines whether or not gas information and so on transmitted from the gas information transmission apparatuses A1 have been received. If gas information and so on have been received, processing proceeds to step S502, and if gas information and so on have not been received, processing proceeds to step S504. Gas information and so on are, for example, gas information and one or more identifiers. The one or more identifiers are, for example, one or more pieces of information of: a customer identifier; and a cylinder identifier.

(Step S502) The gas information accumulation unit A231 forms gas information and so on to be accumulated, using the gas information and so on received in step S501.

(Step S503) The gas information accumulation unit A231 accumulates the gas information and so on formed in step S502 in the gas information storage unit A212. Processing returns to step S501.

(Step S504) The delivery cylinder information reception unit A222 determines whether or not delivery cylinder information and so on have been received. If delivery cylinder information and so on have been received, processing proceeds to step S505, and if delivery cylinder information and so on have not been received, processing proceeds to step S507. Delivery cylinder information and so on are, for example, delivery cylinder information and one or more identifiers. The one or more identifiers are, for example, one or more pieces of information of: a cylinder identifier; a deliverer identifier; and a delivery vehicle identifier.

(Step S505) The delivery cylinder information accumulation unit A232 forms delivery cylinder information and so on to be accumulated, using the delivery cylinder information and so on received in step S504.

(Step S506) The delivery cylinder information accumulation unit A232 accumulates the delivery cylinder information and so on formed in step S505, in the delivery cylinder information storage unit A213. Processing returns to step S501.

(Step S507) The delivery vehicle position information reception unit A223 determines whether or not delivery vehicle position information and so on have been received. If delivery vehicle position information and so on have been received, processing proceeds to step S508, and if delivery vehicle position information and so on have not been received, processing proceeds to step S510. Delivery vehicle position information and so on are, for example, delivery vehicle position information and one or more identifiers. The one or more identifiers are, for example, one or more pieces of information of: a deliverer identifier; and a delivery vehicle identifier.

(Step S508) The delivery vehicle position information accumulation unit A233 forms delivery vehicle position information and so on to be accumulated, using the delivery vehicle position information and so on received in step S507.

(Step S509) The delivery vehicle position information accumulation unit A233 accumulates the delivery vehicle position information and so on formed in step S508, in the delivery vehicle position information storage unit A214. Processing returns to step S501.

(Step S510) Cylinder replacement information reception unit A225 determines whether or not cylinder replacement information and so on have been received. If cylinder replacement information and so on have been received, processing proceeds to step S511, and if cylinder replacement information and so on have not been received, processing proceeds to step S513. Cylinder replacement information and so on are, for example, cylinder replacement information and one or more identifiers. The one or more identifiers are, for example, one or more pieces of information of: a customer identifier; and a cylinder identifier.

(Step S511) The cylinder replacement information accumulation unit A235 forms cylinder replacement information and so on to be accumulated, using the cylinder replacement information and so on received in step S510.

(Step S512) The cylinder replacement information accumulation unit A235 updates the gas remaining amount information regarding the customer information storage unit A211, using the cylinder replacement information and so on formed in step S511. Processing returns to step S501.

(Step S513) The processing unit A23 determines whether or not it is the time to acquire climate information. If it is the time to acquire climate information, processing proceeds to step S514, and if it is not the time to acquire climate information, processing proceeds to step S516. Note that the time to acquire climate information is, for example, every one hour, every one day, or the like.

(Step S514) The climate information acceptance unit A224 acquires climate information and so on from a server (not shown). Here, the climate information acceptance unit A224 may acquire climate information and so on regarding two or more regions, for example.

(Step S515) The climate information accumulation unit A234 accumulates the climate information and so on acquired in step S514 in association with time information, in the climate information storage unit A215. Processing returns to step S501. Climate information and so on are, for example, climate information and time information. The climate information accumulation unit A234 may accumulate climate information and so on in association with time information and a region identifier that identifies a region, in the climate information storage unit A215.

(Step S516) The processing unit A23 determines whether or not it is the time to perform processing, using gas information. If it is the time to perform processing, processing proceeds to step S517, and if it is not the time to perform processing, processing returns to step S501.

(Step S517) The processing unit A23 preforms predetermined processing. Examples of predetermined processing include delivery date prediction processing, delivery control processing, futures trading processing, residence stay processing, energy optimum plan presentation processing, household credit rating acquisition processing, and statistical processing.

(Step S518) The processing unit A23 acquires a processing result that is information that specifies the result of processing performed in step S517.

(Step S519) The processing result output unit A241 outputs the processing result acquired in step S518. Processing returns to step S501.

In the flowchart shown in FIG. 5, processing is terminated when power is turned off or an interruption is made to terminate the processing.

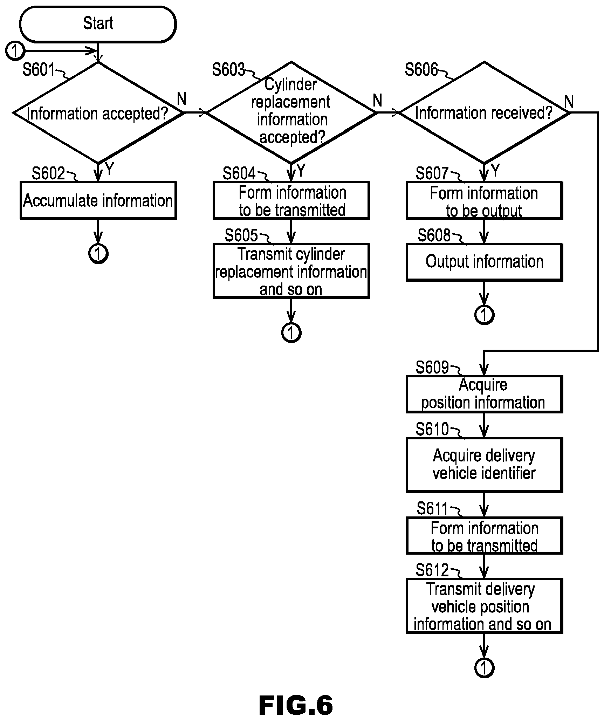

Next, examples of operations that are performed by each deliverer terminal A3 will be described with reference to the flowchart shown in FIG. 6.

(Step S601) The deliverer acceptance unit A32 determines whether or not information has been accepted. If information has been accepted, processing proceeds to step S602, and if information has not been accepted, processing proceeds to step S603. Examples of information include a customer identifier and a cylinder identifier.

(Step S602) The deliverer processing unit A33 at least temporarily accumulate the information accepted in step S601, in the deliverer storage unit A31. Processing returns to step S601.

(Step S603) The deliverer acceptance unit A32 determines whether or not cylinder replacement information has been accepted. If cylinder replacement information has been accepted, processing proceeds to step S604, and if cylinder replacement information has not been accepted, processing proceeds to step S606.

(Step S604) The deliverer processing unit A33 forms cylinder replacement information and so on to be transmitted. Cylinder replacement information and so on contain, for example, a customer identifier and a cylinder identifier.

(Step S605) The deliverer transmission unit A34 transmits the cylinder replacement information and so on formed in step S604 to the information processing apparatus A2. Processing returns to step S601.

(Step S606) The deliverer reception unit A35 determines whether or not information has been received. If information has been received, processing proceeds to step S607, and if information has not been received, processing proceeds to step S609. Note that examples of information include customer information and a delivery list. The delivery list is information regarding a list of customers to which the deliverer delivers gas cylinders.

(Step S607) The deliverer processing unit A33 forms information that is to be output, using the information received in step S606. Examples of information that is to be output include customer information, a delivery list, a map that explicitly shows the position specified by the customer position information contained in the customer information, and route information that is the result of a search for a route from the position specified by delivery vehicle position information to the position specified by the customer position information. Note that the deliverer processing unit A33 may have the function of acquiring delivery vehicle position information (for example, the function of a GPS receiver) and a route search function.

(Step S608) The deliverer output unit A36 outputs the information formed in step S607. Processing returns to step S601.

(Step S609) The deliverer processing unit A33 acquires position information regarding the delivery vehicle. Note that when the deliverer processing unit A33 acquires position information, the deliverer processing unit A33 typically has a GPS receiver, but may use another means to acquire position information. The other means uses, for example, the strength of radio waves transmitted from three or more radio base stations, to perform processing, for example.

(Step S610) The deliverer processing unit A33 acquires a delivery vehicle identifier from the deliverer storage unit A31.

(Step S611) The deliverer processing unit A33 forms delivery vehicle position information and so on to be transmitted, using the delivery vehicle position information acquired in step S609 and the delivery vehicle identifier acquired in step S610.

(Step S612) The deliverer transmission unit A34 transmits the delivery vehicle position information and so on formed in step S611 to the information processing apparatus A2. Processing returns to step S601.

Note that there is no limitation on the time at which the delivery vehicle position information is transmitted in the flowchart shown in FIG. 6.

In the flowchart shown in FIG. 6, processing is terminated when power is turned off or an interruption is made to terminate the processing.

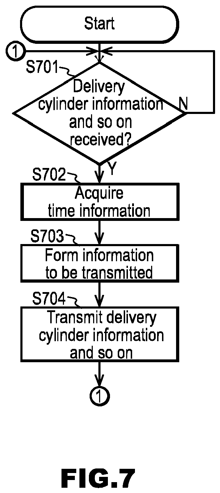

Next, examples of operations that are performed by each facility terminal A4 will be described with reference to the flowchart shown in FIG. 7.

(Step S701) The facility reception unit A45 determines whether or not delivery cylinder information and so on have been received. If delivery cylinder information and so on have been received, processing proceeds to step S702, and if delivery cylinder information and so on have not been received, processing returns to step S701.

(Step S702) The facility processing unit A43 acquires time information from a clock (not shown).

(Step S703) The facility processing unit A43 forms delivery cylinder information and so on to be transmitted, using the delivery cylinder information and so on received in step S701 and the time information acquired in step S702.

(Step S704) The facility transmission unit A44 transmits the delivery cylinder information and so on formed in step S703 to the information processing apparatus A2. Processing returns to step S701.

In the flowchart shown in FIG. 7, processing is terminated when power is turned off or an interruption is made to terminate the processing.

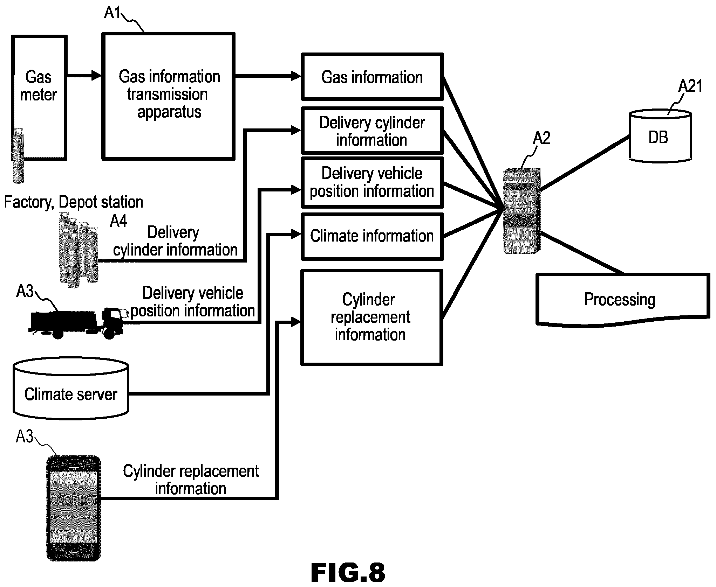

The following describes specific examples of operations that are performed by the information system A according to the present embodiment with reference to a conceptual diagram (FIG. 8) for processing that is performed by the information system A. Note that the conceptual diagram for the system structure of the information system A is FIG. 1.

In the information system A, as described above, pieces of gas information are transmitted from the gas information transmission apparatuses A1 to the information processing apparatus A2 at appropriate points in time, and are accumulated in the information processing apparatus A2. Also, pieces of delivery vehicle position information are transmitted from the deliverer terminals A3 to the information processing apparatus A2, and are accumulated in the information processing apparatus A2. Also, pieces of delivery cylinder information are transmitted from the facility terminals A4 to the information processing apparatus A2, and are accumulated in the information processing apparatus A2. Also, pieces of cylinder replacement information are transmitted from the deliverer terminals A3 to the information processing apparatus A2, and are accumulated in the information processing apparatus A2. Also, the information processing apparatus A2 receives and accumulates climate information from a climate server (not shown). Note that the climate server is a server that stores climate information.

The deliverer terminals A3 that transmit delivery vehicle position information and the deliverer terminals A3 that transmit the deliverer terminals A3 are terminals used by deliverers, and, needless to say, they may be different terminals.

In the information processing apparatus A2, the processing unit A23 performs various kinds of processing, using various kinds of information accumulated in the DB (A21). Examples of the various kinds of processing include delivery date prediction processing, delivery control processing, futures trading processing, residence stay processing, energy optimum plan presentation processing, and household credit rating acquisition processing. Examples of the various kinds of processing may also include processing performed to simply output the results of the above-described statistical processing and various kinds of accumulated information.

As described above, according to the present embodiment, the gas information and so on that contain gas use information regarding the use of LPG cylinders can be collected and used.

In addition, according to the present embodiment, the power consumption of the power source of the gas information transmission apparatuses A1 can be reduced by efficiently transmitting gas information.

In addition, according to the present embodiment, delivery cylinder information that is information regarding the cylinders to be delivered can also be collected and used.

In addition, according to the present embodiment, delivery cylinder information that is information that contains cylinder type information can also be collected and used.

In addition, according to the present embodiment, climate information can also be acquired and used.

Furthermore, according to the present embodiment, cylinder replacement information can be received and used when a cylinder is replaced.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the gas information transmission apparatuses A1 in the present embodiment is the program described below. That is to say, this program is a program that enables a computer that can access a terminal storage unit that stores pieces of gas information as of two or more points in time to function as: a terminal acquisition unit that acquires gas information that is information that includes gas use information regarding use of gas in an LPG cylinder and corresponds to a cylinder identifier that identifies an LPG cylinder; a terminal accumulation unit that accumulates the gas information acquired by the terminal acquisition unit, in the terminal storage unit; a terminal transmission unit that, when a predetermined condition is satisfied, transmits the pieces gas information as of the two or more pints in time stored in the terminal storage unit to the information processing apparatus in association with a customer identifier.

The software that realizes the information processing apparatus A2 in the present embodiment is the program described below. That is to say, this program is a program that enables a computer that can access a gas storage unit that stores two or more pieces of gas information in association with time information that specifies time, and with a customer identifier, to function as: a gas information reception unit that receives gas information that is associated with a customer identifier, from a gas information transmission apparatus that includes a terminal acquisition unit that acquires gas information that is information that includes gas use information regarding use of gas in an LPG cylinder and corresponds to a customer identifier, and a terminal transmission unit that transmits the gas information acquired by the terminal acquisition unit to the information processing apparatus; a gas information accumulation unit that accumulates the gas information received by the gas information reception unit, in the gas information storage unit in association with time information, and with a customer identifier; and a processing unit that performs predetermined processing, using two or more pieces of gas information stored in the gas information storage unit.

### Embodiment 2

The present embodiment describes an information system that includes an information processing apparatus that proposes an energy consumption plan, using gas use information and electricity use information.

The present embodiment also describes an information system that includes an information processing apparatus that proposes an energy consumption plan, using gas use information, electricity use information, and climate information.

In addition, the present embodiment describes an information system that includes an information processing apparatus that performs control to switch between energy appliances and so on based on an energy consumption plan.

Furthermore, the present embodiment describes an information system that includes information processing apparatus that, for example, proposes an energy consumption plan for each time zone, or performs control to switch between energy appliances and so on for each time zone.

Note that the proposal of an energy consumption plan is, for example, a proposal of selection of a medium that is the type of energy that is to be used, a proposal of selection of an appliance related to energy that is to be used, and a proposal of selection of an energy company that is to be used.

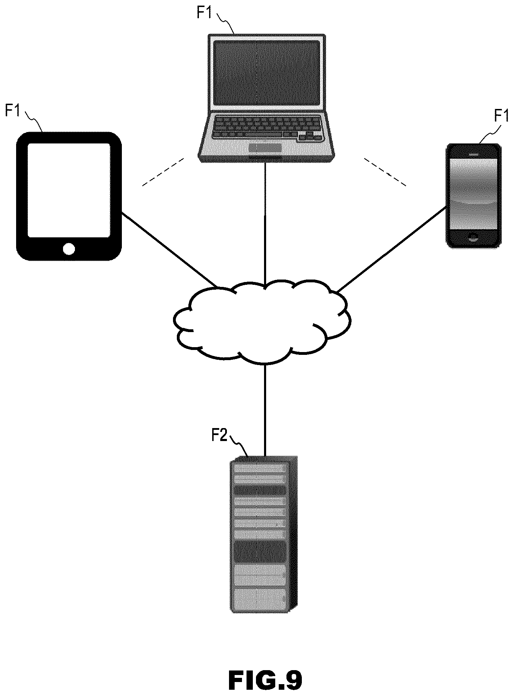

FIG. 9 is a conceptual diagram for an information system F according to the present embodiment. The information system F includes one or more terminal apparatuses F1 and an information processing apparatus F2.

The terminal apparatuses F1 are terminals that output an energy consumption plan. The terminal apparatuses F1 are, for example, smartphones, tablet terminals, so-called personal computers, or the like, but there is no limitation on the type thereof.

The information processing apparatus F2 is an apparatus that acquires an energy consumption plan. The information processing apparatus F2 can be realized using a so-called cloud server or an ASP server, but there is no limitation on the type thereof.

The information processing apparatus F2 may have some or all of the functions of the information processing apparatus A2. That is to say, the information processing apparatus F2 may be an information processing apparatus A2 that performs energy optimum plan presentation processing. Note that energy optimum plan presentation processing does not have to guarantee the optimum plan, and it suffices if the apparatus proposes a plan that the apparatus determines as appropriate. Therefore, optimum plan presentation processing may also be preferred to energy plan presentation processing when appropriate.

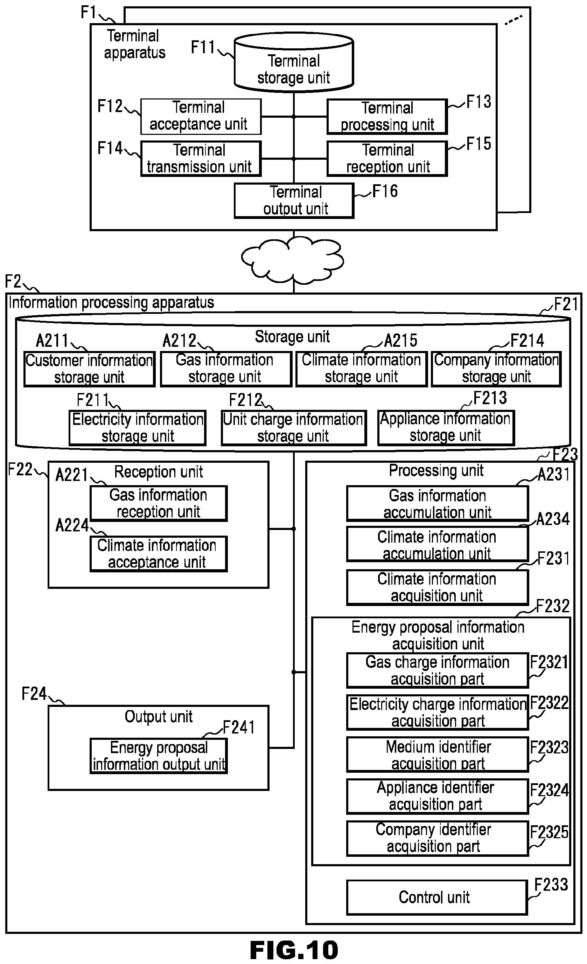

FIG. 10 is a block diagram for the information system F according to the present embodiment.

The terminal apparatuses F1 included in the information system F each include a terminal storage unit F11, a terminal acceptance unit F12, a terminal processing unit F13, a terminal transmission unit F14, a terminal reception unit F15, and a terminal output unit F16.

The information processing apparatus F2 includes a storage unit F21, a reception unit F22, a processing unit F23, and an output unit F24. The storage unit F21 includes the customer information storage unit A211, the gas information storage unit A212, the climate information storage unit A215, an electricity information storage unit F211, a unit charge information storage unit F212, an appliance information storage unit F213, and a company information storage unit F214. The reception unit F22 includes the gas information reception unit A221 and the climate information acceptance unit A224. The processing unit F23 includes the gas information accumulation unit A231, the climate information accumulation unit A234, a climate information acquisition unit F231, an energy proposal information acquisition unit F232, and a control unit F233. The energy proposal information acquisition unit F232 includes a gas charge information acquisition part F2321, an electricity charge information acquisition part F2322, a medium identifier acquisition part F2323, an appliance identifier acquisition part F2324, and a company identifier acquisition part F2325. The output unit F24 includes an energy proposal information output unit F241.

The terminal storage unit F11 included in each terminal apparatus F1 stores various kinds of information. Examples of the various kinds of information include a customer identifier. Note that a customer identifier typically is a household identifier that identifies a household. Here, a customer identifier is information that specifies the head of a household, for example.

The terminal acceptance unit F12 accepts instructions, information, and so on. Examples of instructions, information, and so on include a customer identifier and an energy plan presentation instruction. An energy plan presentation instruction is an instruction to perform energy proposal processing. An energy plan presentation instruction is an instruction that prompts to output energy proposal in formation, which will be described later. The energy plan presentation instruction may contain a customer identifier that specifies a household for which energy proposal information is to be acquired, or may contain no customer identifier. If an energy plan presentation instruction does not contain a customer identifier, the energy plan presentation instruction is an instruction to acquire energy proposal information regarding the households identified by all of the customer identifiers that are under control, for example. Note that any input means may be employed to input an instruction, information, and so on, such as a touch panel, a keyboard, a mouse, a menu screen, or the like.

The terminal processing unit F13 performs various kinds of processing. Examples of the various kinds of information include processing that is performed to convert the instruction, information, and so on accepted by the terminal acceptance unit F12 to an instruction, information, and so on that have a data structure that is to be transmitted. Examples of the various kinds of processing include processing that is performed to convert the information received by the terminal reception unit F15 so as to have a data structure that is to be output.

The terminal transmission unit F14 transmits various kinds of instructions, information, and so on to the information processing apparatus F2. Examples of instructions, information, and so on include a customer identifier and an energy plan presentation instruction.

The terminal reception unit F15 receives various kinds of information, and so on from the information processing apparatus F2. Examples of the various kinds of information and so on include a customer identifier and energy proposal information. Energy proposal information is information regarding a proposal regarding energy. Energy proposal information is information that indicates a proposal regarding energy that is to be used. Examples of energy proposal information include a medium identifier, an appliance identifier, and a company identifier. Examples of energy proposal information include a medium identifier for each time zone, an appliance identifier for each time zone, and a company identifier for each time zone.

Note that a medium identifier is information that identifiers an energy medium (may also be referred to as a "type"). A medium identifier is, for example, "gas", "LPG", "electricity", or the like, but any identifier such as an ID may be used as long as the medium can be identified.

An appliance identifier is information that identifies an energy appliance. An appliance identifier is, for example, "gas fan heater", "gas floor heating", "electric stove", "oil heater" or the like, but any identifier such as an ID may be used as long as the appliance can be identified. Note that an appliance identifier typically is associated with a medium identifier.

A company identifier is information that identifies an energy supplier company. A company identifier is, for example, "company A", "company X", or the like, but any identifier such as an ID may be used as long as it can identify the company.

The terminal output unit F16 outputs various kinds of information and so on. Examples of the various kinds of information and so on include an information set consisting of a customer identifier and energy proposal information. Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The storage unit F21 included in the information processing apparatus F2 stores various kinds of information. Examples of the various kinds of information include customer information described later, gas information, climate information, electricity information described later, unit charge information described later, appliance information described later, and company information described later. Examples of various kinds of information include gas conversion information and electricity conversion information.

Gas conversion information is, for example, information that is used to convert the amount of gas used into the amount of electricity used with the same energy. Gas conversion information is, for example, information that is used to convert the amount of gas used (the unit thereof is, for example, "m³") into an amount in a common energy unit (the unit thereof is, for example, "Joule"). Gas conversion information is, for example, a constant that is used to convert the amount of gas used (the unit thereof is, for example, "m³") to raise the temperature of a space of one size (for example, 1 m³, 8 tatami mats) by one degree, to the amount of use in a common energy unit (the unit is, for example, "Joule") to raise the temperature of the space of one size by one degree. Gas conversion information is, for example, a constant that is used to convert the amount of gas used (the unit thereof is, for example, "m³") to raise the temperature of a space of one size (for example, 1 m³, 8 tatami mats) by one degree, to the amount of electricity used (the unit thereof is, for example, "kw") to raise the temperature of the space of one size by one degree.

Electricity conversion information is, for example, information that is used to convert the amount of electricity used into the amount of gas used with the same energy. Electricity conversion information is, for example, information that is used to convert the amount of gas used (the unit thereof is, for example, "kw") into an amount in a common energy unit (the unit is, for example, "Joule"). Electricity conversion information is, for example, a constant that is used to convert the amount of electricity (the unit thereof is, for example, "kw") required to raise a space of one size (for example, 1 m³, 8 tatami mats) by one degree, to the amount of use in a common energy unit (the unit is, for example, "Joule"). Electricity conversion information is, for example, a constant that is used to convert the amount of electricity used (the unit thereof is, for example, "kw") to raise the temperature of a space of one size (for example, 1 m³, 8 tatami mats) by one degree, to the amount of gas used (the unit thereof is, for example, "m³") to raise the temperature of the space of one size by one degree.

Note that, when electricity conversion information or gas conversion information can be calculated from gas conversion information or electricity conversion information (for example, when gas conversion information is the inverse of electricity conversion information), only one of gas conversion information and electricity conversion information may be stored.

The customer information storage unit A211 stores one or more pieces of customer information each in association with a customer identifier. Note that customer information is information regarding a customer, and is information paired with a customer identifier. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A").

The gas information storage unit A212 stores two or more pieces of gas information that include gas use information. The two or more pieces of gas information are each associated with a customer identifier. Gas use information is information regarding the use of gas. Gas information includes, for example, information regarding the amount of gas used.

The climate information storage unit A215 stores one or more pieces of climate information that is associated with time information (typically, date information).

The electricity information storage unit F211 stores two or more pieces of electricity information that include time-series electricity use information regarding electricity used by a customer. The related information storage unit F211 stores one or more pieces of related information. Electricity use information is information regarding the use of electricity. Electricity use information is information from which the amount of electricity used can be known. The customer identifier associated with gas information and the customer identifier associated with electricity information typically are the same, but may be different identifiers. When the customer identifier associated with gas information and the customer identifier associated with electricity information are different identifiers, the customer identifier associated with gas information and the customer identifier associated with electricity information are associated with each other using information that associates the two identifiers with each other (for example, a common identifier, link information, personal information such as address, or My Number).

The unit charge information storage unit F212 stores two or more pieces of unit charge information. Unit charge information is information that specifies the charge per unit amount of energy. Unit charge information is, for example, unit gas charge information that specifies a gas charge per unit amount, and unit electricity charge information that specifies an electricity charge per unit amount. It is preferable that unit charge information is associated with a company identifier, for example. In addition, unit charge information is associated with a medium identifier, for example. Note that the unit amount of gas is, for example, "m³" or "Joule". The unit amount of electricity is, for example, "kw" or "Joule".

It is preferable that the unit charge information storage unit F212 stores one or more pieces of unit charge information for each time zone from which a unit charge for each time zone can be obtained. Unit charge information per time zone typically is associated with a time zone identifier that specifies a time zone.

It is preferable that the unit charge information storage unit F212 stores two or more pieces of unit charge information that specify the charge per unit amount of the energy provided by two or more companies, in association with the medium identifier that specifies the type of the energy. In such a case, unit charge information typically is associated with a medium identifier and a company identifier.

It is preferable that the unit charge information storage unit F212 stores unit charge information for each time zone from which a unit charge for each time zone can be obtained, for two or more companies. In such a case, unit charge information for each time zone is, for example, associated with a time zone identifier and a company identifier.

The unit charge information storage unit F212 may store unit charge information for each time zone from which a unit charge for each medium and for each time zone can be obtained, for two or more companies. In such a case, unit charge information for each time zone is, for example, associated with a time zone identifier, a medium identifier, and a company identifier.

It is preferable that the unit charge information storage unit F212 stores unit charge information for each time zone, for two or more kinds of energy that at least include gas and electricity. In such a case, unit charge information for each time zone is, for example, associated with a time zone identifier and a medium identifier.

The appliance information storage unit F213 stores one or more pieces of appliance information. Appliance information is information regarding an energy appliance. Examples of energy appliances include a gas fan heater, an electric fan heater, a gas stove, an electric stove, a gas floor heating, an electric floor heating, an air conditioner, and the so on, and there is no limitation on the type thereof. Appliance information contains an appliance identifier and performance information. An appliance identifier is information that identifies an appliance. Performance information is information that specifies the performance of an energy appliance. Performance information indicates, for example, the amount of energy that is required to raise or lower the temperature per certain area (for example, 1 square meter) by a certain degree (for example, one degree), but another indicator may be used. Appliance information typically is associated with a medium identifier. Note that being associated with information may mean including the information.

The company information storage unit F214 stores one or more pieces of company information. Company information is information regarding a company that supplies energy. Company information contains a company identifier that identifies a company that supplies energy. It is preferable that company information is associated with a medium identifier that specifies the type of energy supplied by the company.

The reception unit F22 receives various kinds of information. Examples of the various kinds of information include a customer identifier, an energy plan presentation instruction, gas information, and electricity information.

The processing unit F23 performs various kinds of processing. Examples of the various kinds of processing include processing that is performed by the gas information accumulation unit A231, processing that is performed by the climate information accumulation unit A234, processing that is performed by the climate information acquisition unit F231, processing that is performed by the energy proposal information acquisition unit F232, and processing that is performed by the control unit F233.

The climate information acquisition unit F231 acquires climate information regarding climate. The climate information acquisition unit F231 acquires, from the climate information storage unit A215, climate information that is paired with the time information (for example, date information or time point information) that specifies the time (for example a day, a time point, or a time zone) for which an energy proposal is to be provided.

The energy proposal information acquisition unit F232 acquires energy proposal information that indicates a proposal regarding energy that is to be used, using time-series gas use information and time-series electricity use information. Note that time-series gas use information is two or more pieces of gas use information corresponding to different pieces of time information. Note that time-series electricity use information is two or more pieces of electricity use information corresponding to different pieces of time information.

The energy proposal information acquisition unit F232 acquires the medium identifier that specifies the cheapest energy of two or more kinds of energy, using time-series gas use information and time-series electricity use information, for example.

The energy proposal information acquisition unit F232 acquires, for each time zone, the medium identifier that specifies the cheapest energy of two or more kinds of energy, using gas use information for each time zone, electricity use information for each time zone, and unit charge information for each time zone, for example.

The energy proposal information acquisition unit F232 acquires a gas use representative value (for example, the unit thereof is "m³") from time-series gas use information, for example. A gas use representative value is, for example, the cumulative value, average value, maximum value, or the like of two or more pieces of gas use information. Also, the energy proposal information acquisition unit F232 acquires an electricity use representative value (for example, the unit thereof is "kw") from time-series electricity use information, for example. An electricity use representative value is, for example, the cumulative value, average value, maximum value, or the like of two or more pieces of electricity use information. The energy proposal information acquisition unit F232 acquires gas charge information that indicates the charge corresponding to the gas use representative value, using the gas use representative value and the unit charge information corresponding to the medium identifier "gas" in the unit charge information storage unit F212, for example. Also, the energy proposal information acquisition unit F232 acquires electricity charge information that indicates the charge corresponding to the electricity use representative value, using the electricity use representative value and the unit charge information corresponding to the medium identifier "electricity" in the unit charge information storage unit F212, for example.

Also, the energy proposal information acquisition unit F232 converts the gas use representative value into the amount of electricity used, using gas conversion information, and acquires the electricity charge information corresponding to the amount of electricity used, using the unit charge information corresponding to the medium identifier "electricity". Thereafter, if "electricity charge information < gas charge information" is satisfied, the energy proposal information acquisition unit F232 acquires energy proposal information that proposes to change the use of "gas" to the use of "electricity".

The energy proposal information acquisition unit F232 converts the electricity use representative value into the amount of gas used, using electricity conversion information, and acquires the gas charge information corresponding to the amount of gas used, using the unit charge information corresponding to the medium identifier "gas". Thereafter, if "gas charge information < electricity charge information" is satisfied, the energy proposal information acquisition unit F232 acquires energy proposal information that proposes to change the use of "electricity" to the use of "gas".

Also, the energy proposal information acquisition unit F232 converts the gas use representative value into an amount in a common energy unit (for example, "Joule"), using gas conversion information, and acquires the electricity charge information corresponding to the amount in the common unit, using the unit charge information corresponding to the medium identifier "electricity". Thereafter, if "electricity charge information < gas charge information" is satisfied, the energy proposal information acquisition unit F232 acquires energy proposal information that proposes to change the use of "gas" to the use of "electricity".

Also, the energy proposal information acquisition unit F232 converts the gas use representative value into an amount in a common unit (for example, "Joule"), using electricity conversion information, and acquires the gas charge information corresponding to the amount in the common unit, using the unit charge information corresponding to the medium identifier "gas". Thereafter, if "gas charge information < electricity charge information" is satisfied, the energy proposal information acquisition unit F232 acquires energy proposal information that proposes to change the use of "electricity" to the use of "gas".

The energy proposal information acquisition unit F232 acquires energy proposal information, using the climate information acquired by the climate information acquisition unit F231, time-series gas use information, and time-series electricity use information, for example.

For example, upon determining that the climate information acquired by the climate information acquisition unit F231 is low enough to satisfy a predetermined condition (for example, "the temperature at the time of the target is no higher than a threshold value" or "the predicted temperature of the target day or month is no higher than a threshold value"), the energy proposal information acquisition unit F232 makes a correction to increase the gas use representative value that can be acquired using time-series gas use information and the electricity use representative value that can be acquired using time-series electricity use information, acquires gas charge information and electricity charge information according to the above-described algorithm, using the corrected gas use representative value and the corrected electricity use representative value, and if "gas charge information < electricity charge information", for example, the energy proposal information acquisition unit F232 acquires energy proposal information that proposes to change the use of "electricity" to the use of "gas".

The energy proposal information acquisition unit F232 acquires the appliance identifier corresponding to the cheapest energy, using time-series gas use information, time-series electricity use information, and performance information that is contained in appliance information.

The energy proposal information acquisition unit F232 acquires the appliance identifier corresponding to the cheapest energy for each time zone, using gas use information for each time zone, electricity use information for each time zone, unit charge information for each time zone, and performance information that is contained in appliance information.

The energy proposal information acquisition unit F232 acquires the company identifier of the company that supplies the cheapest energy of the companies that supply energy, using time-series gas use information, time-series electricity use information, company information, and unit charge information, for example.

The energy proposal information acquisition unit F232 acquires the company identifier corresponding to the company that supplies the cheapest energy, using gas use information for each time zone, electricity use information for each time zone, and unit charge information for each time zone, for example.

The gas charge information acquisition part F2321 acquires gas charge information that specifies the charge for the use of gas, using time-series gas use information and unit gas charge information, for example. It is preferable that the gas charge information acquisition part F2321 uses gas use information for each time zone and unit gas charge information for each time zone to acquire gas charge information for each time zone, for example.

The gas charge information acquisition part F2321 acquires gas charge information for each of one or more companies, using time-series gas use information, and unit charge information associated with the gas medium identifier and the company identifier, for example.

The gas charge information acquisition part F2321 acquires a gas use representative value, using time-series gas use information, for example. Thereafter, the gas charge information acquisition part F2321 acquires, for example, the unit charge information associated with the medium identifier "gas" and the company identifier of each company, from the unit charge information storage unit F212, and acquires the gas charge information of each company, corresponding to the gas use representative value, using the unit charge information. If unit charge information includes information sets each consisting of gas use range information and gas unit amount change information, the gas charge information acquisition part F2321 specifies the gas use range information corresponding to the gas use representative value, acquires a piece of gas unit amount charge information that is paired with the gas use range information, and multiplies the gas unit amount charge information and the gas use representative value with each other to calculate gas charge information.

Gas charge information acquisition part F2321 may acquire gas charge information for each time zone for each of one or more companies, using gas use information for each time zone and unit charge information for each time zone associated with the gas medium identifier and the company identifier, for example. In such a case, unit charge information is the gas charge per unit amount.

The gas charge information acquisition part F2321 acquires a gas use representative value, using time-series gas use information, for example. Thereafter, the gas charge information acquisition part F2321 acquires, for example, unit charge information that is paired with the medium identifier "gas", the company identifier, and time zone identifier for each time zone, from the unit charge information storage unit F212. Thereafter, the gas charge information acquisition part F2321 multiplies the gas use representative value with the unit charge information, to calculate the gas charge information for each time zone and for each company.

The electricity charge information acquisition part F2322 acquires electricity charge information that specifies the charge for the use of electricity, using time-series electricity use information and unit electricity charge information.

The electricity charge information acquisition part F2322 acquires an electricity use representative value, using time-series electricity use information, for example. Thereafter, the electricity charge information acquisition part F2322 acquires electricity charge information, using the electricity use representative value and unit electricity charge information, for example. Note that the electricity charge information acquisition part F2322 acquires electricity charge information by multiplying the electricity use representative value and unit electricity charge information with each other, for example. Note that the processing performed by the electricity charge information acquisition part F2322 may be the same as the processing performed by the gas charge information acquisition part F2321.

The electricity charge information acquisition part F2322 may use electricity use information for each time zone and unit electricity charge information for each time zone to acquire electricity charge information for each time zone.

The electricity charge information acquisition part F2322 acquires electricity charge information for each company, using time-series electricity use information, and unit charge information associated with the electricity medium identifier and one or more company identifiers, for example.

The electricity charge information acquisition part F2322 may acquire electricity charge information for each time zone for each of one or more companies, using electricity use information for each time zone, and unit charge information for each time zone associated with electricity medium identifier and one or more company identifiers.

The medium identifier acquisition part F2323 acquires the medium identifier that specifies the cheapest energy of two or more kinds of energy, using time-series gas use information and time-series electricity use information.

The medium identifier acquisition part F2323 acquires the medium identifier that specifies the cheapest energy of two or more kinds of energy, using gas use information and electricity use information, for example. Note that such a medium identifier is included in energy proposal information.

The medium identifier acquisition part F2323 acquires, for each time zone, the medium identifier that specifies the cheapest energy of two or more kinds of energy, using gas use information for each time zone, electricity use information for each time zone, and unit charge information for each time zone, for example.

The medium identifier acquisition part F2323 may acquire, for each time zone, the medium identifier that specifies the cheapest energy of two or more kinds of energy, using gas charge information for the corresponding time zone, and electricity charge information for the corresponding time zone. The medium identifier acquisition part F2323 compares, for each time zone, gas charge information for the corresponding time zone and electricity charge information for the corresponding time zone, and acquires the medium identifier of the energy corresponding to the smaller information.

The appliance identifier acquisition part F2324 acquires the appliance identifier corresponding to the cheapest energy, using time-series gas use information, time-series electricity use information, and performance information that is contained in appliance information.

The appliance identifier acquisition part F2324 acquires the appliance identifier that specifies the appliance corresponding to the cheapest energy of two or more kinds of energy, using gas use information and electricity use information.

The appliance identifier acquisition part F2324 acquires the appliance identifier corresponding to the cheapest energy for each time zone, using gas use information for each time zone, electricity use information for each time zone, unit charge information for each time zone, and performance information that is contained in appliance information, for example.

The appliance identifier acquisition part F2324 acquires the appliance identifier that is the appliance identifier paired with the medium identifier acquired by the medium identifier acquisition part F2323 and that is the appliance identifier paired with the customer identifier of the target customer of the proposal. The appliance identifier acquisition part F2324 acquires the appliance identifier that is paired with the medium identifier of one or more appliance identifiers paired with the customer identifiers with reference to the appliance information stored in the storage unit F21.

When there are two or more appliance identifiers that are each the appliance identifier paired with the medium identifier acquired by the medium identifier acquisition part F2323 and that are each the appliance identifier paired with the customer identifier of the target customer of the proposal, the appliance identifier acquisition part F2324 acquires the appliance identifier that is paired with higher performance information of the two or more appliance identifiers.

It is preferable that the appliance identifier acquisition part F2324 acquires, for each time zone, the appliance identifier that specifies the cheapest energy of two or more kinds of energy, using gas charge information for the corresponding time zone, and electricity charge information for the corresponding time zone.

For example, the medium identifier acquisition part F2323 acquires the medium identifier of the cheaper medium for the same energy (for example, the same Joule) for each time zone, using gas charge information for the corresponding time zone and electricity charge information for the corresponding time zone, for each time zone. Thereafter, the appliance identifier acquisition part F2324 acquires the appliance identifier that is paired with the customer identifier of the target customer of the proposal, for each time zone, for example. Note that, even in such a case, if there are two or more appliance identifiers of cheaper media, paired with the customer identifier of the target customer of the proposal, the appliance identifier acquisition part F2324 acquire the appliance identifier paired with higher performance information of the two or more appliance identifiers.

The company identifier acquisition part F2325 acquires the company identifier of the company that supplies the cheapest energy of the companies that supply energy, using time-series gas use information, time-series electricity use information, company information, and unit charge information, for example.

The company identifier acquisition part F2325 acquires the company identifier that specifies the cheapest energy of two or more kinds of energy, using gas use information and electricity use information. The company identifier acquisition part F2325 acquires the company identifier that specifies the cheapest energy of two or more kinds of energy, typically using unit charge information, gas use information and electricity use information paired with the two or more company identifiers.

The company identifier acquisition part F2325 acquires the company identifier corresponding to the company that supplies the cheapest energy, using gas use information for each time zone, electricity use information for each time zone, and unit charge information for each time zone, for example.

For example, the medium identifier acquisition part F2323 acquires the medium identifier of the cheaper medium for the same energy (for example, the same Joule), using gas charge information and electricity charge information. Thereafter, the company identifier acquisition part F2325 acquires the company identifier corresponding to the cheapest unit charge information with reference to the unit charge information corresponding to the company identifier paired with the acquired medium identifier.

It is preferable that the company identifier acquisition part F2325 acquires, for each time zone, the company identifier that specifies the cheapest energy of two or more kinds of energy, using gas charge information for the corresponding time zone, and electricity charge information for the corresponding time zone.

For example, the medium identifier acquisition part F2323 acquires the medium identifier of the cheaper medium for the same energy (for example, the same Joule) for each time zone, using gas charge information for the corresponding time zone and electricity charge information for the corresponding time zone, for each time zone. Thereafter, the company identifier acquisition part F2325 acquires the company identifier corresponding to the cheapest unit charge information with reference to the time zone unit charge information corresponding to the company identifier paired with the acquired medium identifier.

The control unit F233 performs processing to use the energy corresponding to the energy proposal information output by the energy proposal information output unit F241.

The control unit F233 acquires the current time from a clock (not shown), for example. Next, the control unit F233 acquires one or more identifiers (the current identifiers) of the appliance identifier of the energy appliance that is currently operating, the medium identifier, and the company identifier. Next, the control unit F233 acquires one or more preferable identifiers that are paired with the time zone corresponding to the current time (preferable appliance identifier, medium identifier, or company identifier). Thereafter, the control unit F233 determines whether or not the current identifier is different from the preferable identifier, and if different, the control unit F233 performs control to use the energy indicated by the appliance, medium, or company identified by the preferable identifier. Note that such control is, for example, transmission of an instruction to switch between appliances, transmission of an instruction to switch between companies, output of information to switch between appliances, and output of information to switch between companies.

The control unit F233 performs processing to use the energy corresponding to the accepted medium identifier, of two or more kinds of energy that include gas and electricity, for example. The control unit F233 performs processing to use the energy corresponding to the medium identifier accepted from the energy proposal information output unit F241, for example.

The control unit F233 performs processing to use the energy appliance corresponding to the accepted appliance identifier, for example. The control unit F233 performs processing to use the appliance identifier accepted from the energy proposal information output unit F241, for example.

The control unit F233 performs processing to use the energy corresponding to the accepted company identifier, for example. The control unit F233 performs processing to use the energy corresponding to the company identifier accepted from the energy proposal information output unit F241, for example.

Note that processing that is performed to switch between appliances is, for example, processing that is performed to transmit a stop instruction to the appliance before the switching and processing that is performed to transmit an operation start instruction to the appliance after the switching.

The output unit F24 outputs various kinds of information and instructions. Examples of the various kinds of information and instructions include energy proposal information. Here, "output" means, for example, transmission to an external apparatus such as the terminal apparatuses F1, delivery of processing results to another processing apparatus or another program, and so on, but may be regarded as a concept that includes displaying on a display device, projection with a projector, printing with a printer, sound output, accumulation on a recording medium, and so on.

The energy proposal information output unit F241 outputs the energy proposal information acquired by the energy proposal information acquisition unit F232.

The energy proposal information output unit F241 outputs the medium identifier acquired by the medium identifier acquisition part F2323, for example. The energy proposal information output unit F241 outputs the medium identifier for each time zone, acquired by the medium identifier acquisition part F2323, for example.

For example, when the medium identifier for one time zone acquired by the medium identifier acquisition part F2323 is different from the medium identifier for the previous time zone, the energy proposal information output unit F241 passes the medium identifier for one time zone to the control unit F233 upon the one time zone being reached.

The energy proposal information output unit F241 outputs the appliance identifier acquired by the appliance identifier acquisition part F2324, for example. The energy proposal information output unit F241 outputs the appliance identifier for each time zone, acquired by the appliance identifier acquisition part F2324, for example.

For example, when the appliance identifier for one time zone acquired by the appliance identifier acquisition part F2324 is different from the appliance identifier for the previous time zone, the energy proposal information output unit F241 passes the appliance identifier for one time zone to the control unit F233 when one time zone is reached.

The energy proposal information output unit F241 outputs the company identifier acquired by the company identifier acquisition part F2325, for example. The energy proposal information output unit F241 outputs the company identifier for each time zone, acquired by the company identifier acquisition part F2325, for example.

For example, when the company identifier for one time zone acquired by the company identifier acquisition part F2325 is different from the company identifier for the previous time zone, the energy proposal information output unit F241 passes the company identifier for one time zone to the control unit F233 when one time zone is reached.

Here, "output" means, for example, transmission to an external apparatus such as the terminal apparatuses F1, delivery of processing results to another processing apparatus or another program, and so on, but may be regarded as a concept that includes displaying on a display device, projection with a projector, printing with a printer, sound output, accumulation on a recording medium, and so on.

It is preferable that the terminal storage unit F11, the storage unit F21, the customer information storage unit A211, the gas information storage unit A212, the climate information storage unit A215, the electricity information storage unit F211, the unit charge information storage unit F212, the appliance information storage unit F213, and the company information storage unit F214 are realized using a non-volatile recording medium, but they may be realized using a volatile recording medium.

There is no limitation on the process in which information is stored in the terminal storage unit F11 and so on. For example, information may be stored in the terminal storage unit F11 or the like via a recording medium, or information transmitted via a communication line or the like may be stored in the terminal storage unit F11 or the like, or information input via an input device may be stored in the terminal storage unit F11 or the like.

The terminal acceptance unit F12 can be realized using a device driver for the input means such as a touch panel or a keyboard, or control software or the like for controlling the menu screen.

The terminal processing unit F13, the processing unit F23, the gas information accumulation unit A231, the climate information accumulation unit A234, the climate information acquisition unit F231, the energy proposal information acquisition unit F232, the control unit F233, the gas charge information acquisition part F2321, the electricity charge information acquisition part F2322, the medium identifier acquisition part F2323, the appliance identifier acquisition part F2324, and the company identifier acquisition part F2325 can typically be realized using an MPU, a memory, or the like. The processing procedures performed by the terminal processing unit F13 and so on typically are realized using software, and the software is recorded on a recording medium such as a ROM. However, such processing procedures may be realized using hardware (a dedicated circuit).

The terminal transmission unit F14, the output unit F24, and the energy proposal information output unit F241 typically are realized using a wireless or wired communication means, but may be realized using a broadcast means.

The terminal reception unit F15, the reception unit F22, the gas information reception unit A221, and the climate information acceptance unit A224 typically are realized using a wireless or wired communication means, but may be realized using a means for receiving broadcast.

The terminal output unit F16 may be regarded as including or not including an output device such as a display or a speaker. The terminal output unit F16 can be realized using the driver software of the output device, the driver software of the output device and the output device, or the like.

Next, operations that are performed by the information system F will be described. First, operations that are performed by the terminal apparatuses F1 will be described. The terminal acceptance unit F12 of each of the terminal apparatuses F1 accepts an energy plan presentation instruction. Next, the terminal processing unit F13 converts the energy plan presentation instruction accepted by the terminal acceptance unit F12, into an energy plan presentation instruction that has a data structure that is to be transmitted. Next, the terminal transmission unit F14 transmits the energy plan presentation instruction to the information processing apparatus F2. Thereafter, the terminal reception unit F15 receives from energy proposal information. Next, the terminal processing unit F13 converts the energy proposal information received by the terminal reception unit F15 so as to have a data structure that is to be output. Next, the terminal output unit F16 outputs energy proposal information.

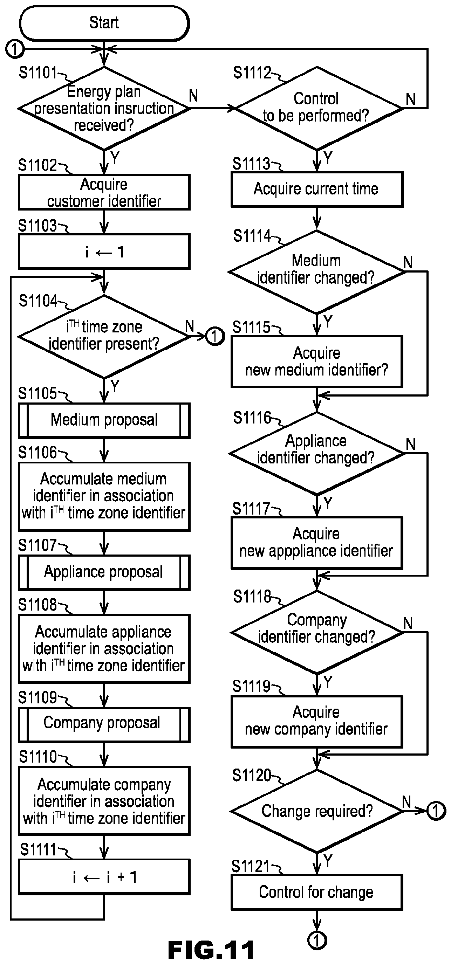

Next, examples of operations that are performed by the information processing apparatus F2 will be described with reference to the flowchart shown in FIG. 11.

(Step S1101) The reception unit F22 determines whether or not an energy plan presentation instruction has been received from a terminal apparatus F1. If an energy plan presentation instruction has been received, processing proceeds to Step S1102, and if an energy plan presentation instruction has not been received, processing returns to Step S1112.

(Step S1102) The energy proposal information acquisition unit F232 acquires a customer identifier from the energy plan presentation instruction received in Step S1101.

(Step S1103) The energy proposal information acquisition unit F232 substitutes 1 for the counter i.

(Step S1104) The energy proposal information acquisition unit F232 determines whether or not the i^{th} time zone identifier for which energy proposal is to be performed is present. If the i^{th} time zone identifier is present, processing proceeds to Step S1105, and if the i^{th} time zone identifier is not present, processing returns to Step S1101. Note that the time zone identifier for which energy proposal is to be performed has been determined in advance, for example.

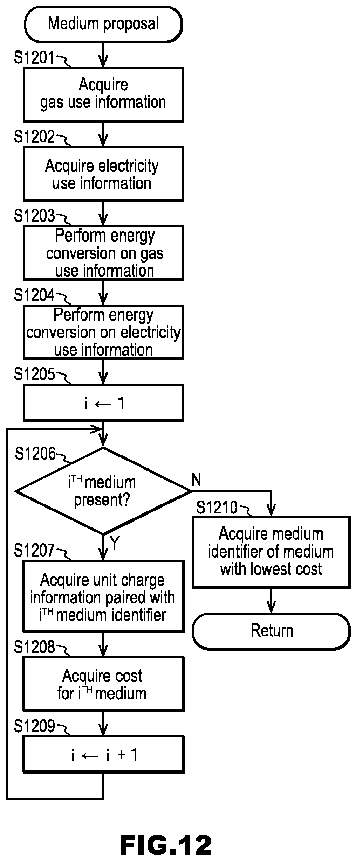

(Step S1105) The energy proposal information acquisition unit F232 performs medium proposal processing. An example of such medium proposal processing will be described with reference to the flowchart shown in FIG. 12.

(Step S1106) The energy proposal information acquisition unit F232 accumulates the medium identifier acquired in Step S1105, in association with the i^{th} time zone identifier.

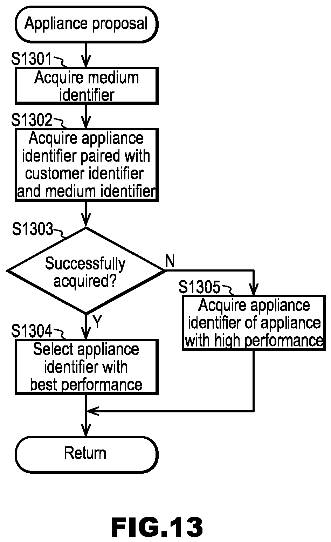

(Step S1107) The energy proposal information acquisition unit F232 performs appliance proposal processing. An example of such appliance proposal processing will be described with reference to the flowchart shown in FIG. 13.

(Step S1108) The energy proposal information acquisition unit F232 accumulates the appliance identifier acquired in Step S1107, in association with the i^{th} time zone identifier.

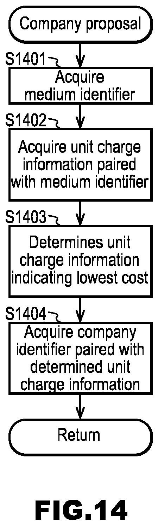

(Step S1109) The energy proposal information acquisition unit F232 performs company proposal processing. An example of such company proposal processing will be described with reference to the flowchart shown in FIG. 14.

(Step S1110) The energy proposal information acquisition unit F232 accumulates the company identifier acquired in Step S1109, in association with the i^{th} time zone identifier.

(Step S1111) The energy proposal information acquisition unit F232 increments the counter i by 1. Processing returns to Step S1104.

(Step S1112) The control unit F233 determines whether or not it is the time to perform control. If it is the time to perform control, processing proceeds to Step S1113, and if it is not the time to perform control, processing returns to Step S1101. Note that there is no limitation on the time to perform control.

(Step S1113) The control unit F233 acquires the current time from a clock (not shown).

(Step S1114) The control unit F233 acquires the medium identifier of the medium that is currently being used. Thereafter, the control unit F233 acquires a preferable medium identifier corresponding to the customer identifier and the current time, from the storage unit F21. Note that the storage unit F21 stores a preferable medium identifier for each time zone, in association with a customer identifier. Thereafter, the control unit F233 determines whether or not the medium identifier of the medium that is currently being used and the preferable medium identifier are different from each other. If they are different, processing proceeds to Step S1115 to change the medium identifier, and if they are not different, processing proceeds to Step S1116 because the medium identifier is not to be changed. Note that the technique for acquiring the medium identifier of the medium that is currently being used is a known technique. Any method may be used to acquire the medium identifier of the medium that is currently being used. For example, the medium identifier of the medium that is currently being used may be input by a user and stored in the storage unit F21.

(Step S1115) The control unit F233 acquires a preferable medium identifier as a new medium identifier for change, and accumulates it in the storage unit F21.

(Step S1116) The control unit F233 acquires the appliance identifier of the appliance that is currently being used. Thereafter, the control unit F233 acquires a preferable appliance identifier corresponding to the customer identifier and the current time, from the storage unit F21. Note that the storage unit F21 stores a preferable appliance identifier for each time zone, in association with a customer identifier. Thereafter, the control unit F233 determines whether or not the appliance identifier of the appliance that is currently being used and the preferable appliance identifier are different from each other. If they are different, processing proceeds to Step S1117 to change the appliance identifier, and if they are not different, processing proceeds to Step S1118 because the appliance identifier is not to be changed. Note that the technique for acquiring the appliance identifier of the appliance that is currently being used is a known technique. Any method may be used to acquire the appliance identifier of the appliance that is currently being used. For example, the appliance identifier of the appliance that is currently being used may be input by a user and stored in the storage unit F21.

(Step S1117) The control unit F233 acquires a preferable appliance identifier as a new appliance identifier for change, and accumulates it in the storage unit F21.

(Step S1118) The control unit F233 acquires the company identifier of the energy supplier company that is currently being used. Thereafter, the control unit F233 acquires a preferable company identifier corresponding to the customer identifier and the current time, from the storage unit F21. Note that the storage unit F21 stores a preferable company identifier for each time zone, in association with a customer identifier. Thereafter, the control unit F233 determines whether or not the company identifier of the company that is currently being used and the preferable company identifier are different from each other. If they are different, processing proceeds to Step S1119 to change the company identifier, and if they are not different, processing proceeds to Step S1120 because the company identifier is not to be changed. Note that there is no limitation on the method for acquiring the company identifier of the energy supplier company that is currently being used. For example, the company identifier of the energy supplier company that is currently being used may be input by a user and stored in the storage unit F21.

(Step S1119) The control unit F233 acquires a preferable company identifier as a new company identifier for change, and accumulates it in the storage unit F21.

(Step S1120) The control unit F233 determines whether or not any new identifier for change has been acquired. If any new identifier has been acquired, processing proceeds to Step S1121, and if a new identifier has not been acquired, processing returns to Step S1101. Note that any of the identifiers are one or more of the medium identifier, the appliance identifier, and the company identifier.

(Step S1121) The control unit F233 performs control to change to the new identifier for change. Processing returns to Step S1101.

In the flowchart shown in FIG. 11, processing is terminated when power is turned off or an interruption is made to terminate the processing.

Next, an example of the medium proposal processing in Step S1105 will be described with reference to the flowchart shown in FIG. 12.

(Step S1201) The energy proposal information acquisition unit F232 acquires gas use information for the corresponding time zone, from the gas information storage unit A212.

(Step S1202) The energy proposal information acquisition unit F232 acquires electricity use information for the corresponding time zone, from the electricity information storage unit F211.

(Step S1203) The energy proposal information acquisition unit F232 acquires the total amount of gas used, using the gas use information acquired in Step S1201. Thereafter, the energy proposal information acquisition unit F232 converts the total amount of gas used, into an amount in a common energy unit (for example, "Joule"), using gas conversion information.

(Step S1204) The energy proposal information acquisition unit F232 acquires the total amount of electricity used, using the electricity use information acquired in Step S1202. Thereafter, the energy proposal information acquisition unit F232 converts the total amount of electricity used, into an amount in a common energy unit (for example, "Joule"), using electricity conversion information.

(Step S1205) The medium identifier acquisition part F2323 substitutes 1 for the counter i.

(Step S1206) The medium identifier acquisition part F2323 determines whether or not the i^{th} medium is present. If the i^{th} medium is present, processing proceeds to Step S1207, and if the i^{th} medium is not present, processing proceeds to Step S1210. Note that whether or not the i^{th} medium is present may be determined based on whether or not the piece of unit charge information corresponding to the i^{th} medium identifier is present in the unit charge information storage unit F212, for example.

(Step S1207) The medium identifier acquisition part F2323 acquires the pieces of unit charge information corresponding to the time zone of interest and corresponding to the i^{th} medium identifier, from the unit charge information storage unit F212.

(Step S1208) The medium identifier acquisition part F2323 references the unit charge information acquired in Step S1207, and calculates the cost in the sum of the amounts in the common energy unit, acquired in steps S4303 and S4304. Note that this cost is the cost for the i^{th} medium.

(Step S1209) The medium identifier acquisition part F2323 increments the counter i by 1. Processing returns to Step S1206.

(Step S1210) The medium identifier acquisition part F2323 acquires the medium identifier corresponding to the minimum cost of the costs calculated in Step S1208. Processing returns to higher level processing.

Next, an example of the appliance proposal processing in Step S1107 will be described with reference to the flowchart shown in FIG. 13.

(Step S1301) The appliance identifier acquisition part F2324 acquires the medium identifier acquired by the medium identifier acquisition part F2323.

(Step S1302) The appliance identifier acquisition part F2324 acquires the appliance identifier that is the appliance identifier paired with the customer identifier and that is paired with the medium identifier acquired in Step S1301.

(Step S1303) The appliance identifier acquisition part F2324 determines whether or not the appliance identifier has been acquired in Step S1302. If it has been acquired, processing proceeds to Step S1304, and if it has not been acquired, processing proceeds to Step S1305.

(Step S1304) If two or more appliance identifiers have been acquired in Step S1302, the appliance identifier acquisition part F2324 acquires the performance information paired with the two or more appliance identifiers from the appliance information storage unit F213, and acquires the appliance identifier paired with the highest performance information. Note that if one appliance identifier has been acquired in Step S1302, the appliance identifier acquisition part F2324 acquires the appliance identifier. Processing returns to higher level processing. Note that the appliance identifier acquired here is the appliance identifier of the appliance that is recommended to be used.

(Step S1305) The appliance identifier acquisition part F2324 acquires the appliance identifier paired with the highest performance information of the pieces of performance information paired with the medium identifiers acquired in Step S1301, from the appliance information storage unit F213. Processing returns to higher level processing. Note that the appliance identifier acquired here is the appliance identifier of the appliance that is recommended to be purchased.

Next, an example of the company proposal processing in Step S1109 will be described with reference to the flowchart shown in FIG. 14.

(Step S1401) The company identifier acquisition part F2325 acquires the medium identifier acquired by the medium identifier acquisition part F2323.

(Step S1402) The company identifier acquisition part F2325 acquires one or more pieces of unit charge information corresponding to the time zone of interest and corresponding to the medium identifier acquired in Step S1401, from the unit charge information storage unit F212.

(Step S1403) The company identifier acquisition part F2325 acquires the unit charge information that indicates the lowest cost of the one or more pieces of unit charge information acquired in Step S1402.

(Step S1404) The company identifier acquisition part F2325 acquires the company identifier paired with the unit charge information acquired in Step S1403, from the unit charge information storage unit F212. Processing returns to higher level processing.

As described above, according to the present embodiment, it is possible to propose an energy consumption plan, using the use status of gas such as LPG and the use status of electricity.

Also, according to the present embodiment, it is possible to propose an energy consumption plan, using the use status of gas such as LPG, the use status of electricity, and climate information.

Also, according to the present embodiment, it is possible to propose energy medium selection, appliance selection, and company selection, using the use status of gas such as LPG.

Also, according to the present embodiment, it is possible to propose energy medium selection, appliance selection, and company selection for each time zone, using the use status of gas such as LPG.

Furthermore, according to the present embodiment, it is possible to perform energy medium selection control, appliance selection control, and company selection control for each time zone, using the use status of gas such as LPG.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus F2 in the present embodiment is the program described below. That is to say, this program is a program that enables a computer that can access a gas information storage unit that stores two or more pieces of gas information that include time-series gas use information regarding use of gas, and an electricity information storage unit that stores two or more pieces of electricity information that include time-series electricity use information regarding use of electricity, to function as: an energy proposal information acquisition unit that acquires energy proposal information that indicates a proposal regarding energy that is to be used, using the time-series gas use information and the time-series electricity use information; and an energy proposal information output unit that outputs the energy proposal information acquired by the energy proposal information acquisition unit.

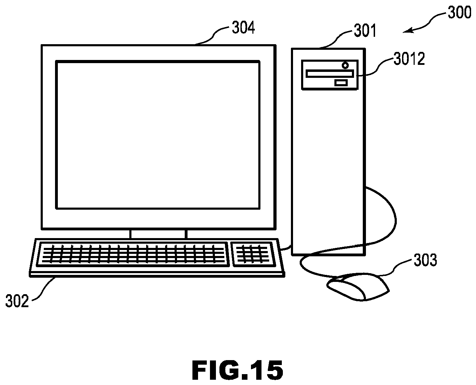

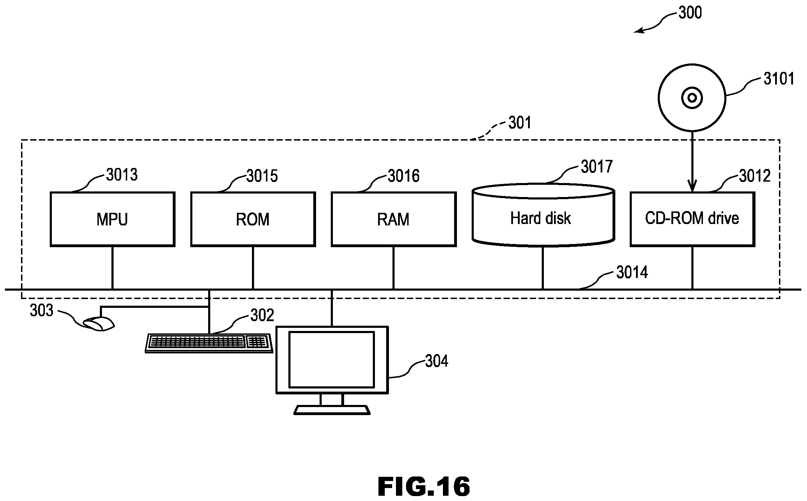

FIG. 15 shows an external appearance of a computer that realizes the information processing apparatus F2 and so on according to the various embodiments described above by executing the programs described in the present description. The above-described embodiments can be realized using computer hardware and a computer program that is executed thereon. FIG. 15 is an overview diagram for this computer system 300, and FIG. 16 is a block diagram for the system 300.

In FIG. 15, the computer system 300 includes a computer 301 that includes a CD-ROM drive, a keyboard 302, a mouse 303, and a monitor 304.

In FIG. 16, the computer 301 includes, in addition to a CD-ROM drive 3012, an MPU 3013, a bus 3014 that is connected to the CD-ROM drive 3012 and so on, a ROM 3015 for storing programs such as a bootup program, a RAM 3016 that is connected to the MPU 3013 to temporarily store an instruction from an application program, and provide a temporary memory space, and a hard disk 3017 for storing an application program, a system program, and data. Although not illustrated here, the computer 301 may further include a network card that provides connection to a LAN.

The program that causes the computer system 300 to execute the functions of the information processing apparatus F2 and so on according to the above-described embodiments may be stored in a CD-ROM 3101, inserted into the CD-ROM drive 3012, and further transferred to the hard disk 3017. Instead, the program may be transmitted to the computer 301 via a network (not shown), and stored in the hard disk 3017. The program is loaded to the RAM 3016 when it is to be executed. The program may be loaded directly from the CD-ROM 3101 or a network.

The program does not necessarily include an operating system (OS) that causes the computer 301 to execute functions such as the information processing apparatus F2 according to the above-described embodiments, a third-party program, or the like. The program need only include an instruction part that calls an appropriate function (module) in a controlled manner to obtain the desired result. It is well known how the computer system 300 works, and therefore detailed description thereof will be omitted.

A single computer or a plurality of computers may execute the above-described program. That is to say, centralized processing or distributed processing may be performed.

Also, as a matter of course, in each of the above-described embodiments, the two or more communication means that exist in one apparatus may be physically realized using one medium.

Furthermore, in each of the above-described embodiments, each kind of processing may be realized through centralized processing that is performed by a single apparatus, or may be realized through distributed processing that is performed by a plurality of apparatuses.

The present invention is not limited to the above-described embodiments, and various modifications can be made. Such modifications are also included in the scope of the present invention as a matter of course.

### Industrial Applicability

As described above, the information processing apparatus according to the present invention achieves the effect of proposing an energy consumption plan, using the use status of gas such as LPG and the use status of electricity, and is useful as, for example, a server apparatus that proposes an energy consumption plan.

## Claims

1. An information processing apparatus comprising:
a gas information storage unit that stores two or more pieces of gas information that contain time-series gas use information regarding use of gas;
an electricity information storage unit that stores two or more pieces of electricity information that contain time-series electricity use information regarding use of electricity;
an energy proposal information acquisition unit that acquires energy proposal information that indicates a proposal regarding energy that is to be used, using the time-series gas use information and the time-series electricity use information; and
an energy proposal information output unit that outputs the energy proposal information acquired by the energy proposal information acquisition unit.

2. The information processing apparatus according to claim 1, further comprising
a climate information acquisition unit that acquires climate information regarding climate,
wherein the energy proposal information acquisition unit acquires energy proposal information that indicates a proposal regarding energy, using the climate information acquired by the climate information acquisition unit, the time-series gas use information, and the time-series electricity use information.

3. The information processing apparatus according to claim 1 or 2, further comprising
a unit charge information storage unit that stores two or more pieces of unit charge information that specify a charge per unit amount of two or more kinds of energy, including unit gas charge information that specifies a gas charge per unit amount, and unit electricity charge information that specifies an electricity charge per unit amount,
wherein the energy proposal information acquisition unit includes:
a gas charge information acquisition part that acquires gas charge information that specifies a charge for use of gas, using the time-series gas use information and the unit gas charge information;
an electricity charge information acquisition part that acquires electricity charge information that specifies a charge for use of electricity, using the time-series electricity use information and the unit electricity charge information; and
a medium identifier acquisition part that acquires a medium identifier that specifies the cheapest energy of two or more kinds of energy, using the gas charge information and the electricity charge information, and
the energy proposal information output unit outputs the medium identifier acquired by the medium identifier acquisition part.

4. The information processing apparatus according to claim 3,
wherein the unit charge information storage unit stores unit charge information for each time zone from which a unit charge for each time zone can be acquired regarding two or more kinds of energy that include gas and electricity,
the gas charge information acquisition part acquires gas charge information for each time zone, using gas use information for each time zone and unit gas charge information for each time zone,
the electricity charge information acquisition part acquires electricity charge information for each time zone, using electricity use information for each time zone and unit electricity charge information for each time zone,
the medium identifier acquisition part acquires, for each time zone, a medium identifier that specifies the cheapest energy of two or more kinds of energy, using gas charge information for the time zone corresponding thereto and electricity charge information for the time zone corresponding thereto, and
the energy proposal information output unit outputs the medium identifier for each time zone, acquired by the medium identifier acquisition part.

5. The information processing apparatus according to claim 4, further comprising
a control unit that performs processing to use energy that corresponds to the accepted medium identifier, of two or more kinds of energy that include gas and electricity,
wherein, when a medium identifier for one time zone acquired by the medium identifier acquisition part is different from a medium identifier for the previous time zone, the energy proposal information output unit passes the medium identifier for the one time zone to the control unit upon the one time zone being reached, and
the control unit performs processing to use energy that corresponds to the medium identifier accepted from the energy proposal information output unit.

6. The information processing apparatus according to claim 1 or 2, further comprising:
a unit charge information storage unit that stores two or more pieces of unit charge information that specify a charge per unit amount of two or more kinds of energy, including unit gas charge information that specifies a gas charge per unit amount and unit electricity charge information that specifies an electricity charge per unit amount; and
an appliance information storage unit that stores two or more pieces of appliance information that contain an appliance identifier that specifies an appliance and performance information that specifies performance of the appliance,
wherein the energy proposal information acquisition unit includes an appliance identifier acquisition part that acquires an appliance identifier that corresponds to the cheapest energy, using the time-series gas use information, the time-series electricity use information, and the performance information contained in the appliance information, and
the energy proposal information output unit outputs the appliance identifier acquired by the appliance identifier acquisition part.

7. The information processing apparatus according to claim 6,
wherein the unit charge information storage unit stores unit charge information for each time zone from which a unit charge for each time zone can be acquired regarding two or more kinds of energy that include gas and electricity, and
the energy proposal information acquisition unit includes an appliance identifier acquisition part that acquires an appliance identifier that corresponds to the cheapest energy for each time zone, using time-series gas use information, time-series electricity use information, the unit charge information for each time zone, and the performance information contained in the appliance information.

8. The information processing apparatus according to claim 7, further comprising
a control unit that performs processing to use an energy appliance that corresponds to the accepted appliance identifier, of two or more kinds of energy that include gas and electricity,
wherein, when an appliance identifier for one time zone acquired by the energy proposal information acquisition unit is different from an appliance identifier for the previous time zone, the energy proposal information output unit passes the appliance identifier for the one time zone to the control unit upon the one time zone being reached, and
the control unit performs processing to use the appliance identifier accepted from the energy proposal information output unit.

9. The information processing apparatus according to claim 1 or 2, further comprising:
a company information storage unit that stores two or more pieces of company information that contain a company identifier that identifies a company that supplies energy, and a medium identifier that specifies a kind of energy supplied by the company; and
a unit charge information storage unit that stores two or more pieces of unit charge information that are associated with a company identifier,
wherein the energy proposal information acquisition unit includes a company identifier acquisition part that acquires a company identifier of a company that supplies the cheapest energy, of companies that supply energy, using the time-series gas use information, the time-series electricity use information, the company information, and the unit charge information, and
the energy proposal information output unit outputs the company identifier acquired by the company identifier acquisition part.

10. The information processing apparatus according to claim 9,
wherein the unit charge information storage unit stores unit charge information for each time zone from which a unit charge for each time zone can be acquired, in association with two or more company identifiers, and
the energy proposal information acquisition unit includes a company identifier acquisition part that acquires a company identifier that corresponds to the cheapest company, using gas use information for each time zone, electricity use information for each time zone, and the unit charge information for each time zone.

11. The information processing apparatus according to claim 10, further comprising
a control unit that performs processing to use energy that corresponds to the accepted company identifier,
wherein, when a company identifier for one time zone acquired by the company identifier acquisition part is different from a company identifier for the previous time zone, the energy proposal information output unit passes the company identifier for the one time zone to the control unit upon the one time zone being reached, and
the control unit performs processing to use energy that corresponds to the company identifier accepted from the energy proposal information output unit.

12. The information processing apparatus according to any one of claims 1 to 11, further comprising:
a gas information reception unit that receives gas information from a gas information transmission apparatus that includes: a terminal acquisition unit that acquires gas information that is information that contains gas use information regarding use of gas in an LPG cylinder and corresponds to a cylinder identifier that identifies an LPG cylinder; and a terminal transmission unit that transmits the gas information acquired by the terminal acquisition unit to the information processing apparatus; and
a gas information accumulation unit that accumulates the gas information received by the gas information reception unit, in the gas information storage unit, in association with the time information and the cylinder identifier.

13. An information processing method that is realized using a gas information storage unit that stores two or more pieces of gas information that contain time-series gas use information regarding use of gas, an electricity information storage unit that stores two or more pieces of electricity information that contain time-series electricity use information regarding use of electricity, an energy proposal information acquisition unit, and an energy proposal information output unit, the information processing method comprising:
an energy proposal information acquisition step in which the energy proposal information acquisition unit acquires energy proposal information that indicates a proposal regarding energy that is to be used, using the time-series gas use information and the time-series electricity use information; and
an energy proposal information output step in which the energy proposal information output unit outputs the energy proposal information acquired in the energy proposal information acquisition step.

14. A program for enabling a computer that can access a gas information storage unit that stores two or more pieces of gas information that contain time-series gas use information regarding use of gas, and an electricity information storage unit that stores two or more pieces of electricity information that contain time-series electricity use information regarding use of electricity, to function as:
an energy proposal information acquisition unit that acquires energy proposal information that indicates a proposal regarding energy that is to be used, using the time-series gas use information and the time-series electricity use information; and
an energy proposal information output unit that outputs the energy proposal information acquired by the energy proposal information acquisition unit.
